# EUROPEAN PATENT SPECIFICATION

(11) **EP 3 982 734 B1**
(45) Date of publication and mention of the grant of the patent: **05.11.2025**
(21) Application number: 20734445.8
(22) Date of filing: 11.06.2020
(51) Int. Cl.: A01N 59/00, A01N 59/16, A01N 59/20, A01N 63/10, A01N 63/16, A01N 25/10, A01P 13/00

(54) **BIOCIDAL COMPOSITE MATERIAL**
BIOZIDES KOMPOSITMATERIAL
MATERIAU COMPOSITION BIOCIDE

(30) Priority: 11.06.2019 GB 201908324
(43) Date of publication of application: 20.04.2022
(73) Proprietor: Pennog Limited, Y Ffor Pwllheli Gwynedd Wales LL53 6US (GB)
(72) Inventor: HUGHES, Jonathan, Huddersfield, West Yorkshire HD2 2HE (GB); ROBERTS, Noel Alan, Caernarfon Gwynedd LL55 1PH (GB)
(74) Representative: Gill Jennings & Every LLP
(86) International application number: PCT/GB2020/051406
(87) International publication number: WO 2020/249949

(56) References cited:
- EP-A1- 0 723 967
- FR-A1- 2 253 553
- GB-A- 2 378 667
- AMBEKAR RUSHIKESH S ET AL: "Advancements in nanofibers for wound dressing: A review", EUROPEAN POLYMER JOURNAL, vol. 117, 13 May 2019 (2019-05-13), pages 304 - 336, XP085713430, ISSN: 0014-3057, DOI: 10.1016/J.EURPOLYMJ.2019.05.020

## Description

### Field of the Invention

The current invention relates to the field of biocidal compositions for preventing the growth of unwanted fouling organisms.

### Background of the Invention

The built environment contains a wide variety of surfaces in which the growth of plants and other sessile organisms is unwanted but, due to the nature of the niche, difficult to prevent. One representative example is tiling on the roofs of houses, which presents a moist environment perfect for the growth of organisms such as mosses, algae, and lichen. The problem is observable in a great number of areas. Unwanted algal growth in humid pool rooms, on glazing, moss growth in gutters, and numerous types of plant and fungus on the external walls of dwellings, are currently often accepted as unavoidable inconveniences.

Because many such unwanted fouling organisms grow better in warm, moist environments, the problem is particularly marked in places which are frequently damp or humid, as well as places which are entirely underwater, and in the case of many plants, places which are well-lit. Roofs are one area which frequently encounter this problem. Such unwanted fouling necessitates on occasion the costly manual removal of the culprit organisms, otherwise structural damage, functional degradation, or loss of aesthetic appeal can occur.

An alternative to infrequent manual removal is to prevent the growth of fouling organisms before it occurs. There are various methods, none of which are ideal. Manual cleaning involves scraping off the moss and spraying the surface with organic biocides such as quinoclamine, didecyldimethylammomium chloride, 3-iodo-2-propynyl-n-butyl carbamate, and benzyl ammonium chloride, which may be harmful to both the user and the local environment. Another is the use of biocidal metals such as copper, which are known to inhibit the growth of many species of plant and algae. Such use generally entails using metallic copper in the form of sheets or wires, however these initially corrode quickly and release copper at an unnecessarily high rate, then form an insoluble layer of copper oxides which blocks copper release and requires costly manual removal to reinitiate it. As such, this option is expensive and can attract thieves, requires relatively frequent replacement, and releases inconsistent and unpredictable levels of copper, or after formation of an inert layer, ineffectively low levels. An ideal solution would release biocidal metal at a relatively constant rate, over a long time. EP 0 723 967 describes antifouling metal releasing polymers.

### Summary of the Invention

It has been found by the present inventor that when a composition comprises shell fragments comprising chitin in addition to a source of biocidal metal such as copper, the rate of release of the biocidal metal into adjoining fluids and thus, the environment, is usefully regulated. This allows consistent release of biocidal levels of metal over a long period of time. The inventor also found that if the composition further comprises a degradable material, the rate of release is conveniently responsive to environmental cues such as ultraviolet light, acidity, hydraulic erosion, and temperature fluctuations.

According to a first aspect of the invention, there is provided a composition for reducing the growth of fouling organisms through release of biocidal metal therefrom into the environment, the composition comprising: mollusc, brachiopod, and/or crustacean shell fragments comprising chitin; a biocidal metal; and a degradable material, wherein the mollusc, brachiopod, and/or crustacean shell fragments and biocidal metal are admixed with, and dispersed throughout, the degradable material.

According to a second aspect of the invention, there is provided the use of a composition in reducing the growth of fouling organisms through release of biocidal metal therefrom into the environment, the composition comprising mollusc, brachiopod, and/or crustacean shell fragments comprising chitin admixed with a biocidal metal.

According to a third aspect of the invention, there is provided the use of a composition in reducing the growth of fouling organisms through release of biocidal metal therefrom into the environment, the composition comprising: mollusc, brachiopod, and/or crustacean shell fragments comprising chitin; a biocidal metal; and a degradable polymer, wherein the mollusc, brachiopod, and/or crustacean shell fragments and biocidal metal are admixed with, and dispersed throughout, the degradable material..

According to a fourth aspect of the invention, there is provided a device for reducing the growth of fouling organisms through release of biocidal metal therefrom into the environment, the device having a housing comprising an inlet and an outlet and a composition contained within the housing, the composition comprising: mollusc, brachiopod, and/or crustacean shell fragments comprising chitin admixed with a biocidal metal, wherein the device is configured such that a fluid may enter the housing, pass over the composition, and exit the housing.

According to a fifth aspect of the invention, there is provided the use of such a device in reducing the growth of fouling organisms.

According to a sixth aspect of the invention, there is provided a surface comprising the composition of the first aspect, or an article formed of the composition according to the first aspect, applied thereto, preferably wherein the surface is a roofing material, a component of a wall or floor, glazing, or cladding.

According to a seventh aspect of the invention, there is provided a paint, coating, or sealant comprising the composition of the first aspect or the composition used in the third aspect.

According to an eighth aspect of the invention, there is provided an article formed of the composition according to the first aspect of the invention.

### Brief description of the Figures

Figures 1, 2 and 3 show one potential mechanism by which the claimed composition gradually releases biocidal metals such as copper.
Figure 1 shows an article (a) formed of the claimed composition comprising a photodegradable polymer matrix (b) (degradable material) with mollusc, brachiopod, and/or crustacean shell fragments comprising chitin (d), mollusc, brachiopod and/or crustacean shell fragments comprising chitin with bound biocidal metal (e), and biocidal metal (c) admixed with, and dispersed throughout, the polymer matrix (b).
Figure 2, (f), shows how, upon exposure to ultraviolet light, the composition begins to degrade as partial photodegradation of the polymer matrix occurs. This degradation provides channels for rainwater ingress into the article.
Figure 3, (g), shows the ingress of rainwater (typically pH 5.5-6.5) into the article. The slightly acidic rainwater partially dissolves the calcium carbonate present in the mollusc, brachiopod, and/or crustacean shell fragments, and oxidisation of the biocidal metal occurs and the rainwater solubilises the biocidal metal ions. At (h) and (i), Figure 3 shows the progress of the rainwater through and across the article formed of the composition, transferring biocidal metal and releasing them into the environment and onto any desired surface for reducing the fouling of organisms thereon.
Figure 4 shows copper ion release from an article formed of the claimed composition comprising Polylactate (PLA) as the degradable material, (specifically composition PLA5SF10CP of Example 2).
Figures 5 shows the cumulative mass of copper released (mg) in each solution after soaking of an article formed of the claimed composition comprising polyester as the degradable material, as per Example 3. Materials marked 'p' refer to experiments which included a photodegradation step.
Figure 6 shows cumulative copper release from soaking articles formed of the claimed composition comprising polyester as the degradable material containing fragments of different types of mollusc, brachiopod, or crustacean shell.

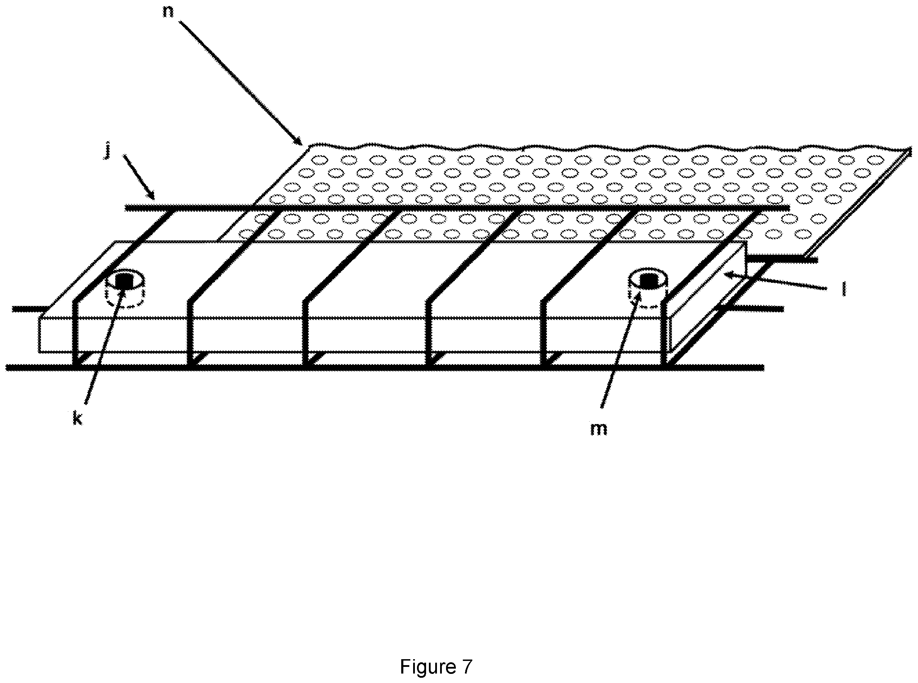

Figure 7 shows a device according to the fourth aspect of the invention. The housing (j) of the device is formed of rigid mesh and contains an article (l) formed of the claimed composition. The article (l) is held in place by attachment means (k) and (m). The flexible attachment plate (n) facilitates attachment of the device to a surface, such as a roof tile.

### Detailed Description of the Invention

The present invention relates to biocidal compositions useful for preventing the growth of unwanted fouling organisms. The biocidal compositions comprise mollusc, brachiopod, and/or crustacean shell fragments comprising chitin, and a biocidal metal such as copper. The biocidal compositions may also comprise a degradable material, such as a degradable polymer, in which the mollusc, brachiopod, and/or crustacean shell fragments and biocidal metal are admixed with, and dispersed throughout. The biocidal compositions are gradually degraded by environmental forces such as light, wind, rain, and temperature fluctuations, and release the biocidal metal contained within into the adjoining environment. Degradation of the biocidal compositions includes dissolution of the mollusc, brachiopod, and/or crustacean shell fragments comprising chitin, and/or degradation of the degradable material, by environmental factors. As many fouling organisms such as lichen, moss, and higher plants have their ability to grow compromised by biocidal metals, this prevents their growth. Such biocidal metals in low concentrations are not hazardous to the environment.

The mollusc, brachiopod, and/or crustacean shell fragments comprising chitin, and the degradable material of the composition, have structures which alter when acted on by various environmental influences, and this usefully regulates the release rate of the biocidal metal.

The mollusc, brachiopod and/or crustacean shell fragments comprising chitin are able to bind biocidal metal thereto.

The chitin of the mollusc, brachiopod, and/or crustacean shell fragments is able to bind biocidal metals, and therefore the presence of the mollusc, brachiopod, and/or crustacean shell fragments in the composition increases the metal storage capacity of the composition, as well as decreasing the rate of metal release.

Upon exposure of the composition to environmental factors, such as rainwater or water washing over the composition, biocidal metal may be bound to the mollusc, brachiopod and/or crustacean shell fragments comprising chitin, for example, through chelation of biocidal metal ions by the chitin of the mollusc, brachiopod and/or crustacean shell fragments. The term "biocidal metal" as used herein, includes biocidal metal elements and biocidal metal salts thereof. Upon exposure to environmental factors, the biocidal metal ions are thus formed by oxidation of biocidal metal compounds or from biocidal metal salts, and are solubilised in the rainwater.

It will be appreciated by a skilled person that the biocidal metal is releasably bound to the chitin of the mollusc, brachiopod, and/or crustacean shell-fragments, such that upon degradation of the shell fragments as discussed below, the biocidal metal is released into the environment.

Further, the mollusc, brachiopod and/or crustacean shell fragments also contain calcium carbonate, which is somewhat soluble in environmental fluids, such as aqueous fluids, such as slightly acidic rainwater. Therefore, when an aqueous fluid such as rainwater washes over an exposed surface of a shell fragment, the calcium carbonate of the shell fragment dissolves to form carbonate ions on the surface thereof which interact with the biocidal metal ions. The carbonate ions of the shell fragment thus also binds the biocidal metal ions thereto through formation of metal carbonates. The rate of release of the biocidal metal in the rainwater as it travels through or across the composition or an article formed thereof, is therefore retarded. For example, when the biocidal metal is copper sulphate or particulate copper, the dissolution of the calcium carbonate of the shell fragments allows carbonate ions to interact with copper ions to form a layer/particles of copper carbonate salt, which further retards the release of the biocidal metal. As the mollusc, brachiopod and/or crustacean shell fragments slowly dissolve and degrade further upon action of the rainwater, the bound biocidal metal is released and carried into the aqueous fluid stream.

When the mollusc, brachiopod, and/or crustacean shell fragments comprising chitin and the biocidial metal are admixed with, and dispersed throughout a degradable polymer, the degradable material also changes structure when acted on by various environmental influences. The degradable material may be degradable by various environmental affronts, for example by electromagnetic radiation, such as ultraviolet light; by the hydraulic action of wind or rain; the abrasive action of wind-blown particles such as soil and sand; temperature fluctuations and/or extremes; and/or acidic fluids such as rainwater and bird droppings. Preferably, the degradable material is degraded by ultraviolet light. As it slowly degrades, for example upon exposure to ultraviolet radiation, it exposes the mollusc, brachiopod, and/or crustacean shell fragments containing chitin that are dispersed throughout. As discussed above, upon action of rainwater or water, biocidal metal ions bind to the chitin of the mollusc, brachiopod, and/or crustacean shell fragments. In addition, the shell fragments comprising chitin are slowly dissolved as discussed above, controlling the release of the biocidal metal. A steady amount of biocidal metal is released, but at a lesser rate than a non-corroded object made of the biocidal metal alone. As such the degradable material-comprising composition is effective for periods of time longer than alternative compositions. The composition also solves the problems of reactivity encountered by bare metals, as no inert outer oxide or carbonate layer forms which require scrubbing off to restart the release of the biocidal metal.

Furthermore, as discussed in more detail below, in light of the partially porous nature of the mollusc, brachiopod, and/or crustacean shell fragments and their hydratability, when a surface of the mollusc, brachiopod and/or crustacean shell fragment comprising chitin is exposed to fluid, such as water or rainwater, there is gradual hydration of the entire shell fragment and any biocidal metal on the surface thereof. This further supports the transport of water through the composition.

In the claimed composition, or composition of the claimed uses, the biocidal metal in the composition may either be: (a) free, or freely dispersed throughout the degradable polymer, when present, or (b) some of the biocidal metal is bound to the mollusc, brachiopod, and/or crustacean shell fragments, as well as being free, or freely dispersed throughout the degradable polymer, when present. This will depend upon the method of production of the composition, which is discussed in more detail later in the specification.

Preferably, when the degradable material is absent from the composition, the above described degradation of the composition takes place upon exposure of the composition to environmental fluid, such as aqueous fluid, such as water or rainwater.

Preferably, when the degradable material is present in the composition, the above described degradation of the composition takes place upon exposure of the composition to ultraviolet light followed by environmental fluid, such as aqueous fluid, such as water or rainwater.

The composition can be used in a wide variety of situations and environments for preventing the growth of fouling organisms, which as used herein refers to any biocidal metal-sensitive organism whose situation in a particular area is undesired. Envisaged fouling organisms include plants, for example bryophytes such as mosses, spike mosses, liverworts, and hornworts; algae such as cyanobacteria, green algae, red algae, and brown algae; lichen, fungi, non-pathogenic bacteria and protozoa, and pathogenic organisms including bacteria, fungi, amoebae, SBR (sulphate reducing bacteria) species, excavates, nematodes, and flatworms. Preferably, algae, mosses, and lichens have their growth reduced. These may be undesired in such places as roofs and gutters, swimming pool rooms, glazing, paving and other surfaces around pools and water features; outside decking, and various configurations of structural or decorative masonry such as walls, fountains, and rock gardens. Other envisaged organisms include molluscs such as mussels; crustaceans such as barnacles; or worms and bryozoans, which may foul marine architecture such as the hulls of ships, oil rigs, and jetty pillars.

Reducing the growth of such fouling organisms is envisaged to include the killing of organisms, the reduction of healthy growth and reproductive processes, and also the pre-emptive prevention of migration of organisms or establishing structures such as spores, seeds, or juvenile forms.

The claimed composition comprises mollusc, brachiopod, and/or crustacean shell fragments comprising chitin, a biocidal metal, and a degradable material. In some claimed uses, the degradable material is not present, and a composition comprising the mollusc, brachiopod, and/or crustacean shell fragments admixed with a biocidal metal is used to prevent fouling, preferably contained in a housing able to prevent the escape of what may be dry powdered materials. Regarding any claimed use or composition, each component may be added in a variety of forms, each being additionally envisaged as part of a device comprising the composition. Preferably, in the claimed uses, the degradable material is present in the composition, the mollusc, brachiopod, and/or crustacean shell fragments comprising chitin and the biocidal metal being admixed with, and dispersed throughout.

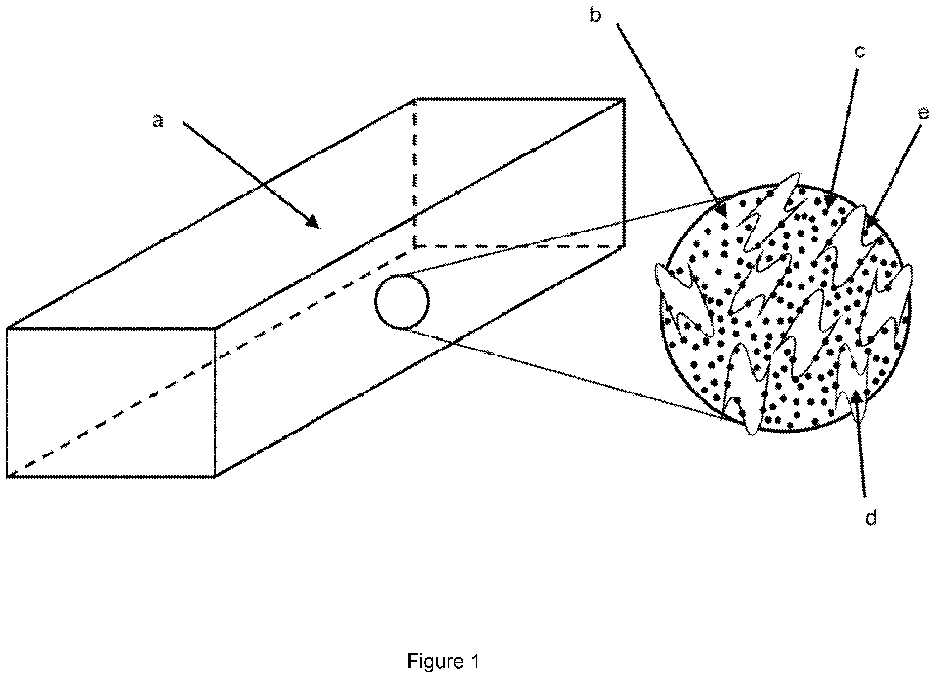

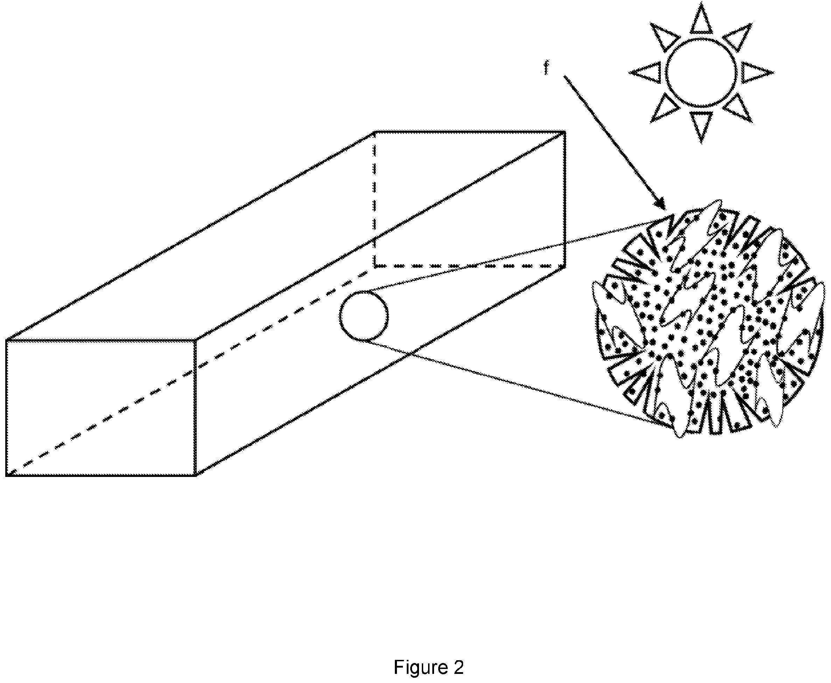

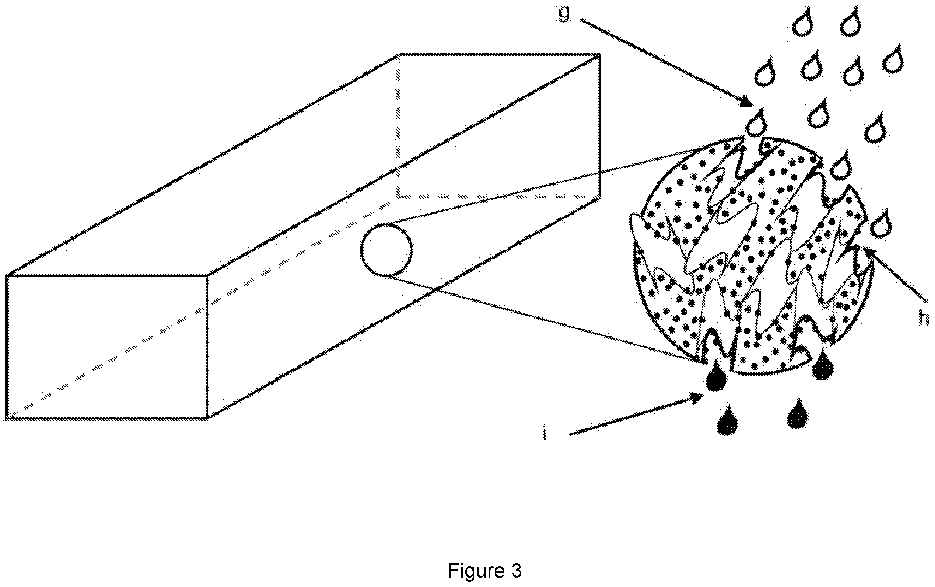

Being slightly soluble in acidic fluids such as rainwater, which normally has a pH of approximately 5.5-6.5, the internal studding of a degradable material such as a polymer matrix with such mollusc, brachiopod, and/or crustacean shell fragments allows steady release of the biocidal metal as discussed above. Without wishing to be bound by theory, one mechanism through which this may occur is the gradual formation of channels throughout the polymer matrix, which link the external environment to steadily deeper areas of polymer matrix, having the mollusc, brachiopod, and/or crustacean shell fragments comprising chitin and biocidal metal distributed within, to allow egress of the biocidal metal, as illustrated in Figures 1-3. Alternatively or additionally, as a composition comprising a degradable material gradually sheds layers in response to environmental affront, new stretches of mollusc, brachiopod, and/or crustacean shell fragments comprising chitin and biocidal metal are gradually exposed to the environment. In addition, as discussed above, biocidal metals such as copper also react with calcium carbonate present in the mollusc, brachiopod, and/or crustacean shell fragments to form a thin layer of an insoluble salt or particulate metal carbonate, these two factors each reducing the rate of metal egress. Further, in light of the mollusc, brachiopod and/or crustacean shells being formed of hydratable material, it is proposed that upon hydration of the mollusc, brachiopod and/or crustacean shell fragments with water or rainwater, hydrated channels are formed in the shell fragments, enabling further binding of the biocidal metal ions as discussed above.

The mollusc, brachiopod, and/or crustacean shell fragments comprising chitin may be pieces of any solid biological mollusc, brachiopod, and/or crustacean structure which comprises chitin. The shell may for example be from a mollusc, such as a mussel, oyster, clam, squid or whelk; a brachiopod; or a crustacean such as a crab, lobster, crayfish, barnacle, or shrimp; or it may derive from the exoskeleton of insects; or it may be derived from fish scales. The shell also comprises the acid-degradable mineral calcium carbonate. The composition may further comprise fragments of any mineral, other than the mollusc, brachiopod and/or crustacean shell fragments, which gradually erodes, and is preferably soluble in slightly acidic fluids like rainwater, such as calcium carbonate, may be added to the composition. These fragments may be of limestone, chalk, marble, travertine, tufa, or any other calcium carbonate-comprising substance. Preferably, the shell fragments derive from the shell of a mollusc, more preferably a bivalve mollusc, yet more preferably a mussel or oyster, and more preferably, a mussel. The shell fragments may also be any mixture of any of the above shells. The material may be waste material from the fishing or food industries.

The claimed composition, and the composition of the claimed uses, may further comprise additional chitin. It will be appreciated by a skilled person that this additional chitin may be introduced into the composition in a form other than shell fragment, such as in the form of partly or highly purified grains, fibres, sheets, powders, flakes, particles, or any other shape of chitin. The additional chitin may also be chitin-containing material derived from insects or derived from other hard biological structures, for example fungal structures, or materials isolated from cultures of chitin-producing microorganisms such as chitin-producing bacteria or fungi.

Further, the claimed composition and the composition of the claimed uses, may further comprise chitosan. It will be appreciated by a skilled person that this chitosan may be introduced into the composition in the form of partly or highly purified grains, fibres, sheets, powders, flakes, particles, or any other shape of chitosan. The chitosan may also be chitosan-containing material derived from insects or derived from other hard biological structures, for example fungal structures, or materials isolated from cultures of chitosan-producing microorganisms such as chitin-producing bacteria or fungi.

It will be appreciated by a skilled person that the mollusc, brachiopod, and/or crustacean shell fragments comprising chitin utilised in the present invention degrade over time upon exposure to environmental influences such as rainwater. Such mollusc, brachiopod, and/or crustacean shell fragments are at least partially porous, i.e. can be considered hydratable materials as a result of the organic material such as the chitin present in their structure. In light of the partially porous nature of the mollusc, brachiopod, and/or crustacean shell fragments and their hydratability, when a surface of the mollusc, brachiopod and/or crustacean shell fragment comprising chitin is exposed to fluid, such as water or rainwater, there is gradual hydration of the entire shell fragment and any biocidal metal on the surface thereof. This further supports the transport of water through the composition.

The mollusc, brachiopod, and/or crustacean shell fragments of any claimed composition or use of a composition may be derived by crushing, grinding, chopping, milling and sieving, or otherwise producing small portions of shell from this source material. Methods of producing small fragments of hard materials are known by the skilled person, and ball milling with metal balls in a spinning cylinder is envisaged as an exemplary method of producing particularly fine particles. It will be appreciated that the shell fragments have a three-dimensional structure, and may be in the form of, but not limited to, needles, flakes or particles. Fragments of greater than 10 µm in size may be used, by this is meant fragments of a size greater than 10 µm in all dimensions may be used. Fragments having a longest dimension of greater than 10 µm may be used. Fragments may be used having a longest dimension substantially falling into the size range of 150 to 1200 µm, preferably 150 to 800 µm, more preferably 250 to 500 µm, yet more preferably 300 to 450 µm, even more preferably 350 to 450 µm. They may be slightly fragmented into pieces with widths largely in the range of 3 cm to 5 cm, or 1 cm to 3 cm, preferably 1.5 cm to 2.5 cm, or in the range of 0.1 cm to 1 cm. They may have diameters substantially falling into the size range of 150 to 1200 µm, preferably 150 to 800 µm, more preferably 250 to 500 µm, yet more preferably 300 to 450 µm, even more preferably 350 to 450 µm, or they may have diameters substantially falling into the size range of 300 to 1200 µm, preferably 500 to 1000 µm, more preferably 600 to 900 µm, yet more preferably 700 to 800 µm. They may also be fragments substantially having diameters of 1 mm or more, for example 1 to 10 mm, preferably 3 to 7 mm, more preferably 4 to 6 mm. Alternatively they may be very fine particles with diameters substantially falling into the size range of 10 to 250 µm, preferably 50 to 200 µm. All diameters apply equally to fragments of a degradable mineral such as calcium carbonate when the composition comprises these. Fragments sizes may be determined by sieve analysis and/or microscopy. All sizes refer to an average.

As the size and source of the shell fragments govern their metal-binding and erosion profiles, these parameters may be chosen specifically to produce a particular metal efflux rate suitable for a particular application or particular location. In the case that the shell fragments are encased in a degradable material such as a degradable polymer, using smaller fragments results in a more consistent, higher rate of metal release for a given concentration of metal in the composition. Additionally, the metal efflux rate may be modified by adding additional chitin and/or chitosan in crystalline or other solid form, to any of the present invention's compositions, or to any component of a composition before incorporation. This augments the composition's metal-binding properties and allows fine adjustment to a particular use or situation.

In both compositions claimed and compositions having their use claimed, the biocidal metal may be present in the composition in a variety of ways. It may be free, or freely dispersed within the degradable material when the degradable material is present, or some may be bound to the mollusc, brachiopod and/or crustacean shell fragments comprising chitin, as well as being free, or freely dispersed throughout the degradable polymer, when present. To provide a composition in which some of the biocidal metal is bound to the mollusc, brachiopod and/or crustacean shell fragments, the biocidal metal may be pre-bound to the mollusc, brachiopod and/or crustacean shell fragments comprising chitin before these are incorporated into a matrix of degradable material. This may be by contacting shell fragments with a solution containing the biocidal metal. Such a liquid may be a solution prepared specifically for this purpose, or may be an environmental sample containing the biocidal metal, for example a waste stream, such as a waste stream runoff from a mine, distillery, or other facility producing runoff with a high level of biocidal metal.

Methods of forming the claimed composition, composition of the claimed uses, or claimed articles therefore include the admixing of the mollusc, brachiopod and/or crustacean shell fragments comprising chitin with a biocidal metal, and if required, the degradable polymer, wherein the mollusc, brachiopod and/or crustacean shell fragments further comprise pre-bound biocidal metal, the mollusc, brachiopod and/or crustacean shell fragments comprising chitin having been pre-treated to bind the biocidal metal thereto. This binding may be achieved by contacting the mollusc, brachiopod and/or crustacean shell fragments with a solution containing the biocidal metal. The binding is through chelation and/or metal carbonate salt formation in a similar manner to as discussed above in relation to the exposure of the composition to environmental factors such as rainwater. The composition will thus comprise a combination of both free, or freely dispersed biocidal metal, and well as biocidal metal bound to the mollusc, brachiopod and/or crustacean shell fragments comprising chitin. The free and bound biocidal metal will preferably be the same biocidal metal, or at least comprise the same biocidal metal element.

Alternatively, the biocidal metal, the mollusc, brachiopod, and/or crustacean shell fragments comprising chitin and if present, the degradable material, may all be mixed together, preferably while the degradable material is solidifying into a chosen shape. In this instance, it will be appreciated that the biocidal metal will be present in the composition free, or when a degradable material is present in the composition, freely dispersed throughout the degradable polymer.

Methods of forming the claimed composition, composition of the claimed uses, or claimed article thus further include the admixing of the mollusc, brachiopod and/or crustacean shell fragments with a biocidal metal and optionally, a degradable polymer.

For all the methods of formation of the claimed composition, composition of the claimed uses, or claimed article, it is crucial that preparation proceeds, as far as possible, without the introduction of water into the composition. This is to avoid any such water being turned to steam during preparation of the composition or an article formed therefrom which would cause fissures and damage the integrity of the composition or article.

Accordingly, in the method of formation in which biocidal metal is pre-bound to the mollusc, brachiopod and/or crustacean shell fragments, following contact of the biocidal metal and shell fragments in solution, the resulting mollusc, brachiopod and/or crustacean shell fragments having the bound biocidal thereon must be dried prior to mixing with the biocidal metal and if present, the degradable material.

Accordingly, methods of forming the claimed composition, composition of the claimed uses, or claimed article include the admixing of the mollusc, brachiopod and/or crustacean shell fragments with a biocidal metal, and if required, the degradable material, wherein the mollusc, brachiopod and/or crustacean shell fragments comprise further pre-bound biocidal metal, the mollusc, brachiopod and/or crustacean shell fragments having been pre-treated to bind the biocidal metal thereto. The method of binding may comprise contacting mollusc, brachiopod and/or crustacean shell fragments with a solution containing the biocidal metals, and drying the resulting mollusc, brachiopod and/or crustacean shell fragments having the biocidal metals bound thereto prior to admixing with the biocidal metal and if present, the degradable material.

Preferably, the claimed composition, and compositions used in the claimed uses, or in formation of the claimed article is a substantially anhydrous composition or article. By "substantially anhydrous" composition is meant a composition or article having a water content of less than 25% by weight of the composition or article, preferably less than 15%, more preferably less than 10%, such as less than 5%, and most preferably less than 1% by weight of the composition or article.

Accordingly, the mollusc, brachiopod and/or crustacean shell fragments are "substantially dry", i.e. preferably have a water content of less than 10%, such as less than 5%, or even of 1% by weight of mollusc, brachiopod and/or crustacean shell fragments, measured using AND Model ML-50 moisture analyser under conditions of 5g of mass held at 200 °C for 9 minutes. Further, when present in the composition, the components used to form the degradable material, i.e. the monomers of a degradable polymer, preferably have a water content of less than 5%, such as 1%, by weight of components used to form the degradable material.

Regarding the biocidal metal, the biocidal metal is preferably a biocidal metal salt in anhydrous form, such as copper sulphate in anhydrous form. It will be appreciated by a skilled person that water of crystallisation of less than 2% by weight of the biocidal metal salt may be present in such a biocidal metal salt on account of the salt not being 100% pure.

Any biocidal metal which effectively reduces the growth of fouling organisms is envisaged, and preferably copper, zinc, potassium, and/or silver are used. Copper is a particularly preferable biocidal metal, as in low concentrations it is an essential nutrient for many organisms (as shown by the reduction in growth at 0 copper concentration seen in Table 12). The same is true for zinc. Mixtures of metals are also envisaged, for example copper and silver may be added together to produce the disinfecting effect of copper-silver ionisation.

In certain applications, potassium is the preferred biocidal metal. Because it is acutely toxic to certain species of aquatic pest such as the zebra mussel, it may form part of compositions of the current invention intended for use in or near bodies of water affected, or at risk of being affected. When it is added as a salt to a composition of the present invention, it is preferably added as potassium chloride.

The biocidal metal may be added in the form of particles having a diameter of greater than 1 µm, for example as particles having diameters substantially falling into the size range of from 1 to 2000 µm, preferably 500 to 1500 µm, more preferably 750 to 1250 µm; or 1 to 100 µm, preferably 1 to 45 µm, more preferably 1 to 20 µm. Unreactive metals are envisaged in particular for incorporation as the elemental metal, that is, when elemental metal powder is part of any composition, the biocidal metal may be a metal outside of the alkali and alkali earth metals. Particle size of the biocidal metal refers to average particle size. Particle size may be determined by sieve analysis.

As stated above, the term "biocidal metal" includes biocidal metal elements and biocidal metal salts thereof. Accordingly, salts of the biocidal metals are also envisaged for use in the present invention as the biocidal metal. For example, if copper is to be used, copper sulphate powder and/or copper sulphate solution are appropriate, and if zinc is used, zinc powder and/or zinc sulphate are appropriate. Upon exposure to the environment, biocidal metals such as copper oxidise to form the metal oxide, which has similar biocidal properties to elemental copper, and hence such biocidal metal salts are also envisaged in the term biocidal metal. Any mixture of such biocidal metal, for example a mixture of copper salts with zinc powder, or copper powder with zinc powder, is envisaged for incorporation into the composition.

Accordingly, as used herein, biocidal metal may also refer to salts such as the arsenate, titanate, aspirinate, benzoate, chromite, gluconate, hydride, ibuprofenate, selenide, monosulfide, oxide, peptide, peroxide, salicylate, silicide, sulphide, sulphate, usnate, acetylide, bromide, chloride, fluoride, cyanide, hydroxide, iodide, nitrate, nitrite, nitride, phosphate, phosphide, butoxide, thiocyanate, thiophene-2-carboxylate, 8-hydroxyquinolate, acetate, azide, carbonate, chlorate, perchlorate, tetrafluoroborate, triflate, or any other salts of a biocidal metal, including those which also comprise second or further cations; or any mixture of such salts. Complexes in which the metal moiety does not carry a formal charge are also envisaged, for example copper ethanolamine and copper trioethanolamine.

Preferably, copper sulphate, copper dehydrate, copper trihydrate, copper hexahydrate or copper heptahydrate is incorporated as the biocidal metal. More preferably, copper sulphate is incorporated as the biocidal metal. For example, the copper sulphate may be provided by anhydrous copper sulphate or copper sulphate pentahydrate. Preferably, copper sulphate is used in the anhydrous form.

Another component of the claimed composition is the degradable material. The degradable material behaves such that as the composition is exposed to environmental affronts or influences such as ultraviolet light, acidity, hydraulic erosion and/or fluctuations or extremes of temperature, it gradually degrades to expose the mollusc, brachiopod, and/or crustacean shell fragments comprising chitin, which may have biocidal metal bound thereto, and biocidal metal dispersed throughout its matrix. In this way, the composition's biocidal metal is slowly and steadily released into the area selected for coverage upon contact of the composition with fluid such as rainwater, as discussed above. Preferably, the degradable material is a photodegradable material, i.e. the degradable material gradually degrades upon exposure to ultraviolet light.

Any material which is degraded by environmental affronts is envisaged. It may be that the rate of degradation is preferably above a certain threshold. One way of measuring general degradation rate is to produce tokens of material of dimensions 1.6 x 1.6 x 5.0 cm containing copper, suspend them in fresh solutions of pH 5.5 for 23 hours, resuspend them in fresh solutions for two more periods of 23 hours, then freeze them for 24 hours, defrost them over 4 hours at room temperature, and place them in a 70°C oven for 70 hours. During the soaking steps, copper released into the solutions can be measured, for example by inductively coupled plasma related methods. This degradation cycle of three soaking steps, a freezing step, a defrosting step, and a drying step can be repeated, and the copper released measured during each repeat. If the copper is released at a rate which is biocidal to an envisaged fouling organism, the material is appropriate. It may be that the copper concentration at the end of the third soak cycle, when soaked in 2.5L of soak solution each time, is above 1 µg/L, or above 3 µg/L, or above 5 µg/L, or above 7 µg/L, or above 9 µg/L, or above 11 µg/L, or above 13 µg/L, or above 15 µg/L.

Photostability can be measured by irradiating the tokens with UV bulbs, for example UVA 340 bulbs at a UV intensity of 0.6 W/m² measured at 340 nm, for a suitable length of time such as 168 hours, before the second set of soaking steps, and measuring copper release in the same way.

The degradable material may be any material which degrades at a suitable rate as measured above, and is preferably a degradable polymer such as a plastic, wood fibre, melanoidins (see US 2017/0349751), or paper composition.

When the degradable material is a degradable polymer it may, for example, comprise a thermoplastic or a thermosetting polymer, and/or it may comprise one or more polymer selected from the list consisting of polyurethane, polylactic acid, polyacrylamide, polyhydroxyalkanoate, polypropylene, acrylic resin, BPA/F epoxy, polyketone, polyester, vinyl ester, novolac epoxy, PTFE, nylon 66, PEEK, and glycidylamine epoxy. Preferably, the degradable polymer comprises melanoidins, polyurethane, polylactic acid, polyhydroxyalkanoate, polypropylene, acrylic resin, BPA/F epoxy, polyketone, melanoidins, and/or polyester.

Different degradable materials have different degradation properties in response to various environmental affronts, and hence for compositions including a degradable material, the choice of material will affect the speed with which the mollusc, brachiopod and/or crustacean shell fragments comprising chitin are exposed in different environments, in turn affecting the rate at which the biocidal metal is released. In some environments, a material with high hydrolytic stability is required. In others, a material with high photostability would be preferred. In yet other environments, materials with high thermal stability would be preferred. In some environments, a material highly stable with respect to particular affronts but less stable with respect to the others would be useful, for example in areas with frequent temperature fluctuations but little rain or UV exposure, where it may be that the ideal degradation rate is found in a material with high thermostability and low photo- or hydrolytic stability. Materials tested by the above method, loaded with copper sulphate as per BPA10CS in Example 1, with no artificial UV irradiation, found to release less than 20 mg/L of copper in combined degradation cycles 2 and 3 may be considered highly hydrolytically stable, while those which release less than this when confronted with the same three soaking steps per cycle as above but with a UV irradiation step described above may be considered highly photostable.

The degradable material may be a degradable polymer. Different polymers have different profiles of stability. When polyurethane is incorporated, hydrolytic stability is affected by whether polyether or polyester type polyurethane is used, with polyether polyurethane being more hydrolytically stable than the polyester type. The polyether type therefore releases biocidal metal over a longer time period in environments which are frequently wet. Polyhydroxyalkanoate is resistant to water but less resistant to acids and bases, and may therefore be a good choice for compositions and articles intended for use in areas with frequent and mildly acidic rainfall. Similarly, polypropylene, acrylic resin, BPA/F epoxy, and polyketone are highly hydrolytically stable and would release biocidal metal at a lower rate. Conversely, polymers such as polyester, polylactic acid, and nylon 66 are less hydrolytically stable and may be good choices for use in environments with low rainfall, as a larger amount of metal release is required on each occasion of rain.

Polymers also vary in their photostability, and may be chosen specifically on this basis to suit the selected environment. Polyurethanes, polypropylene, BPA/F and novolac epoxies, polyketone, nylon 66, and PEEK are quite susceptible to degradation by UV, and hence in areas which are frequently cloudy or at high latitudes, biocidal metals may be released at a more appropriate rate if such polymers are used in the composition. Conversely, polyhydroxyalkanoate, acrylic resin, polyester, vinyl ester, and PTFE, are more UV stable, and hence may be more appropriate choices for areas with more UV exposure, such as near the equator, to ensure that the metal release rate is not unnecessarily high.

Thermal stability is another property which varies significantly between different polymers, and hence selection of a polymer or blend of polymers with particular thermal stability profiles represents another way of tailoring the composition to a particular environment or particular use. BPA, for example, is thermally-speaking relatively unstable, and may therefore degrade at a suitable rate even in environments presenting low UV levels or few hydraulic affronts, providing a good rate of biocidal metal release.

In situations where high rates of biocidal metal release are necessary, polymers or polymer blends particularly susceptible to the prevalent form of environmental affront may be preferred.

To provide a composition with very finely tailored properties to generate a biocidal metal release rate suited to the particular niche and protective application envisaged, a blend of polymers may be used. This blend may comprise one, two, three, four, five, six, or any other number of polymers such as those named above, and in blending them, a composition having a favourable profile of photostability, thermal stability, and hydrolytic stability may be generated. Any method of mixing the polymers is envisaged, including melt mixing, solution blending, latex mixing, partial block or graft copolymerisation, and preparation of interpenetrating polymer networks. The polymer blends thereby generated may be miscible polymer blends, immiscible polymer blends, homologous polymer blends, isomorphic polymer blends, and/or compatible polymer blends. Polymer alloys, in which the interface and/or the morphology of an immiscible blend is modified, are also envisaged. In particular, blends of a thermosetting polymer and a thermoplastic polymer are envisaged. In such blends, it may be that the mass of the thermosetting polymer as a proportion of the total mass of polymer is 10% to 40%, or 35% to 65%, or 60% to 90%. Blends of a plurality of thermoplastic polymers are also envisaged in particular, that is, one, two, three, four, five, six or more thermoplastic polymers blended into the composition.

The composition may take the form of a multi-material composition or article formed of the composition in which the properties of the produced object depend on the mutual topology and configuration of each material involved. For example, a first composition comprising a first degradable material, a first biocidal metal, and a first amount of mollusc, brachiopod and/or crustacean shell fragments may be dispersed throughout a second degradable material matrix. Such an object allows the second degradable material matrix to degrade in response to a particular set of environmental affronts, exposing the first composition for degradation in response to a different set of affronts. The first composition may be in the form of beads, rods, filaments, sheets, or any other shape, and it may be that upon erosion of the second (or third, fourth, or further) material matrices, the first composition is released into the area envisaged for protection, to be degraded throughout a later period, releasing biocidal metal. One example of the utility of this setup is that the second material may be particularly photodegradable, degrading in summer to expose a more hydraulically degradable material which is more readily degraded in winter. The output of biocidal metal therefore remains relatively consistent, even as the environmental affronts present vary throughout the year. Such beads may equally be placed in a render, and each bead may be beads of one material wrapped in a second material, each layer having potentially its own concentration of biocidal metal, and/or each having a different biocidal metal and/or its own profile of shell fragments.

Another envisaged modification of the properties of the degradable material comprises mixing a polymer with additives to tailor the photostability, thermal stability, hydrolytic stability, texture, flexibility, or any other property of the material or material blend. The additives may comprise one or more of the following: Triphenyl phosphite, trisnonylphenylphosphite, tris(p-cresyl) phosphite, tris(2-ethylhexyl) phosphite, tridecyl phosphite, trilauryl phosphite, tris(tridecyl) phosphite, diphenyl mono (2-ethylhexyl) phosphite, diphenyl monodecyl phosphite, diphenyl mono (tridecyl) phosphite, tetraphenyl dipropyleneglycol diphosphite, tetraphenyl tetra(tridecyl) pentaerithritol tetraphosphite/bis(2-ethylhexyl)phthalate, tetra(C12-C15 alkyl)-4,4'-isopropylidene diphenyl diphosphite, bis(tridecyl)pentaerythritol diphosphite/bis(nonylphenyl)pentaerythritol diphosphite, bis(decyl)pentaerythritol diphosphite, bis(tridecyl)pentaerythritol diphosphite, tristearyl phosphite, distearyl pentaerythritol diphosphite, tris(2,4-di-tert-butylphenyl)phosphite, hydrogenated bisphenol A pentaerythritol phosphite polymer, hydrogenated bisphenol A phosphite polymer, 2-Hydroxyethyl methacrylate acid phosphate, nitrilo trismethylenephosphonic acid melamine salt, zinc stearyl phosphate, 2-(2'-hydroxy-5'-methylphenyl)benzotriazole, 2-(2'-Hydroxy-3'-tert-butyl-5'-methylphenyl)-5-chlorobenzotriazole, 2-(2'-Hydroxy-3',5'-di-tert-amylphenyl)benzotriazole, 2-(2'-Hydroxy-5'-tert-octylphenyl)benzotriazole, 2,2'-methylenebis[6-(2H-benzotriazol-2-yl)-4-tert-octyl phenol], 6-(2-benzotriazolyl)-4-tert-octyl-6'-tert-butyl-4'-methyl-2,2'-methylenebisphenol, bis (2,2,6,6-tetramethyl-4-piperidyl) sebacate, and/or bis (1,2,2,6,6-pentamethyl-4-piperidyl) sebacate.

One set of additives envisaged in particular are those which modulate the photostability of a composition or article of the present invention. Photostabilisers or UV-absorbing additives, such as carbon black, are envisaged for their ability to increase the photostability of materials. Photocatalysts or other ingredients which reflect or re-emit UV light, such as titanium dioxide, are envisaged as additives able to decrease the photostability of materials. Pigments and dyes may also be added to modify the colour of the composition or article formed thereof for example to make the composition or article blend in with the surface or make it more aesthetically pleasing, or to alter the wavelengths of light incident on the material structure, and hence alter the degradation rate.

Lignin may also be incorporated as an additive, preferably to a degradable polymer acting as degradable material, as it increases the thermal and hydrolytic strength of polymers but still leaves less photostable polymers susceptible to UV-mediated degradation. Preferably, when lignin is used it is as an additive to thermoplastic polymers, so that a thermally and hydrolytically stable composition with low resistance to UV degradation may be provided.

The degradable material is preferably a degradable polymer, which may be formed as part of the composition or article formed therefrom in any conventional way. For example, BPA may be generated from resin and hardener in any functioning ratio, which may be mixed with mollusc, brachiopod, and/or crustacean shell fragments and biocidal metal during mixing of the resin and hardener, or the mixture of resin and hardener may be mixed with mollusc, brachiopod and/or crustacean shell fragments which have previously been contacted, for example soaked in, metal salt solution, and then dried. Polymer beads may be melted and the liquid polymer mixed with the mollusc, brachiopod, and/or crustacean shell fragments comprising chitin and the biocidal metal, an electromagnetically curable polymer may be cured with a UV or other electromagnetic radiation source after being mixed with the shell fragments and biocidal metal, or any other method of producing the polymer may be employed. The curing process may take place at any appropriate temperature and for any appropriate time period, for example BPA may be cured at 90°C for 24 hours. The process of forming the composition or an article formed therefrom may also involve solvent evaporation. Such curing processes are well-understood by the skilled person.

The properties of the composition vary with the proportions of different constituents, used. As such, the composition may be tailored to provide ideal biocidal activity in a wide variety of environments. For claimed compositions and compositions of claimed uses in which a degradable material, a biocidal metal, and mollusc, brachiopod, and/or crustacean shell fragments comprising chitin are used, the composition may comprise degradable material at any percentage by weight, for example from 5% to 95%. This percentage may be from 0.1% to 10%; or it may be from 10% to 40%, wherein it may be from 20% to 60%, preferably 20% to 30%, or it may be from 30% to 60%, wherein it may be from 40% to 50% or from 30% to 50%, preferably 35% to 45%, or it may be from 50% to 80%, wherein it may be from 60% to 70%, or it may be from 70% to 99%, wherein it may be from 80% to 90%. Any combination of materials is envisaged, the percentage by weight referring to the sum of the weights of the different materials.

For any claimed composition or composition of a claimed use, including as with all embodiments those which are envisaged for use in the device; whether or not a degradable material is present, inasmuch as the total percentage of ingredients does not exceed 100%, the percentage by weight of biocidal metal may be from 0.1% to 90%; or it may be from 0.1% to 80%, or 0.1% to 70%, or 0.1% to 60%, 0.1% to 50%, 0.1% to 40%, 0.1% to 30%, 0.1% to 20%, 0.1% to 10%, preferably the percentage by weight of biocidal metal may be from 1% to 40%, such as from 1% to 30%, such as 4% to 20%, or 8% to 16%, or 10% to 14%. This weight of biocidal metal refers to the weight of biocidal metal in the form of biocidal metal element. Alternatively, the percentage by weight of biocidal metal may be preferably from 5% to 50%, such as 10% to 50%, such as 10 to 40%, or even 20% to 40% or 20% to 30% or from 25% to 35%, further wherein it may be from 28% to 32%, or it may be from 30% to 60%, wherein it may be from 40% to 50%, or it may be from 50% to 80%, wherein it may be from 60% to 70%, or it may be from 70% to 99%, wherein it may be from 80% to 90%.

This weight of biocidal metal refers to the weight of biocidal metal in the form of biocidal metal salt, such as anhydrous biocidal metal salt.

In any of the above embodiments, inasmuch as the total percentage does not exceed 100%, the percentage by weight of mollusc, brachiopod and/or crustacean shell fragments in the composition may be from 10% to 90%, such as from 15% to 70%, such as from 15% to 50%, such as from 20% to 50%, or even from 30% to 45%. Further, inasmuch as the total percentage of ingredients does not exceed 100%, the percentage by weight of chitin in the mollusc, brachiopod and/or crustacean shell fragments in the composition may be from 0.1% to 50%, such as from 0.5% to 40%, or 0.5% to 30%, and preferably 0.5% to 25%, such as 2% to 20%, or 5% to 20%. Further, inasmuch as the total percentage of ingredients does not exceed 100%, the percentage weight of chitin in the composition may be from 0.01% to 40%, such as from 0.05% to 30%, or preferably 0.05% to 20%, such as 1% to 10%.

The properties of the compositions, claimed either as such or as uses of compositions, vary with the proportions of the various constituents used. As a general principle, the higher the proportion of mollusc, brachiopod, and/or crustacean shell fragments comprising chitin, the slower the release of biocidal metal will be, as it tightly binds biocidal metals such as copper. Conversely, the higher the proportion of the metal used, the more is present in each volume of exposed matrix, and the more will be released per unit time for a given level of environmental affront. Therefore the relative percentages may be adjusted to provide a release rate suitable for preventing growth in a particular niche, or of a particular organism. A representative example may be a high-biocidal metal, low-mollusc, brachiopod, and/or crustacean shell fragments comprising chitin composition, for example one with more than 35% anhydrous biocidal metal salt by weight, for placement in an area liable to heavy organismic fouling which requires a high dose of biocidal metal to counteract. This sort of composition may also be preferred in areas with high rainfall, such as places with more than 50 cm/year, or more than 70 cm/year, or more than 90 cm/year, as the higher factor of dilution necessitates a higher original metal concentration. Conversely, a high-shell, low-metal composition may be particular suitable where a long-lasting, low-dosage supply of metal is preferred.

The geometry of the area envisaged for protection also has a bearing on which composition will be ideal. If one block of composition (an article) is to protect a small area of surface experiencing a fluid flow such as rainfall, the maximum dilution factor at the edge of the area will be smaller than for a large area. As such, for the example of roofs, a larger roof will be better served by a composition with high metal loading, which allows even the extremities of the roof to experience a concentration of metal with biocidal effects. As such, it may be that a composition having a mass ratio of biocidal metal to composition of 30% or above is used on roofs of an area larger than 55 m², 45 m², 35 m², 25 m², or 15 m².

With regard to the whole of an area envisaged for protection receiving a biocidal concentration of biocidal metal, it may also be that any of the compositions claimed for use are used such that the lowest concentration of biocidal metal in the region envisaged for protection, in a rainy period of average intensity for the area, is for most of the time above a certain concentration. This concentration may be 5 µg/L, or it may be 10 µg/L, 25 µg/L, 50 µg/L, or 100 µg/L, or 250 µg/L, or 500 µg/L. The skilled person is able to choose degradable materials and/or proportions of biocidal metal and mollusc, brachiopod and/or crustacean shell fragments comprising chitin; and sizes of the composition used, to achieve this.

The compositions relating to the present invention may be used in a wide variety of different situations to prevent and reduce the growth of fouling organisms. They may be used whenever a fluid such as rainwater washes over any one of the compositions and onto an area, the area thereby becoming protected against such organisms.

The claimed compositions comprising a degradable material may take the form of an article formed of the composition such as a block of the composition, optionally with one or more holes drilled for ease of attachment to a wall or component thereof, a roof or component thereof, or other surfaces. One such use envisaged is as a roof-bar or ridge tile, shaped for attachment to a part of a roof such as the apex, allowing rainwater, solar radiation, and temperature fluctuations to gradually degrade the degradable material and gradually release the biocidal metal into whatever rain or other liquid flows down the roof and preferably into the gutters and down a drainpipe, reducing the growth of fouling organisms on every surface it comes into contact with. It is envisaged that the site of prevention may extend some distance from the site of attachment, as the invention may be placed anywhere known to be upstream from the site of protection with regard to a, preferably reoccurring, fluid movement of some kind. For example, on a house with several adjoining or overlapping pitched roofs, it is envisaged that the invention may be placed at the apex of the uppermost roof, and the biocidal action will extend to the lower roofs onto which rain from the uppermost roof drains. In such a situation, it may be that the release rate or percentage by weight metal proportion of the invention may be increased to allow greater coverage.

As certain degradable materials such as degradable polymers can be moulded or extruded into a wide variety of forms and articles, the claimed compositions which comprise a shapable material, such as a degradable polymer may also take the form of an architectural element, such as a windowsill or frame; garden decking, architectural cladding, roofing materials, roof tiles, fence poles, light housings, ornamental fountain components or attachments; or be shaped so as to be accommodated effectively by a pre-existing such architectural element. They may be shaped into pipes or guttering, or a lining for pipes or guttering, to assist in inhibiting the fouling of these places. In particular, compositions inhibiting the growth of moss may be shaped into or added to architectural guttering and downpipes, while compositions aimed at inhibiting the growth of fouling mussels may be used in protecting water pipes in which these may grow. Other types of piping in which it may be that the pipe is formed out of a composition of the current invention, or utilises blocks or other fixtures of it, are those in hydroponic systems, industrial cooling systems, and any recirculating water system in which algal growth is problematic. In this context or any other, the fouling organisms envisaged for growth reduction may be a biofilm, and may be a biofilm comprising algae and/or bacteria. The invention therefore includes an article formed of the claimed composition.

Some compositions of the current invention may be particularly suitable for reducing the growth of pathogenic organisms like *Legionella* in water pipes and cooling systems. One such composition includes both silver and copper as the biocidal metals, allowing disinfection via copper-silver ionisation.

The compositions may be shaped into articles such as roofing shingles, or blocks shaped so as to be accommodated on top of or in between roofing shingles, or blocks shaped so as to slot neatly into guttering or drainpipes. In particular, the compositions may be formed or incorporated into an article such as a ridge tile, or another fixture suitable for placement at the apex of a pitched roof, or suitable for placement at a top edge of a vertical or inclined glazed surface. Similarly, they may be shaped into articles such as paving slabs or decking units, or any other surface whether vertical, horizontal, or inclining, or into blocks designed to fit in between paving slabs or decking units, or in between any two adjoining surfaces of any orientation. They may also be shaped or incorporated into articles such as roof panels, for example those used in constructing sheds.

The compositions of the invention may be shaped into articles to be affixed into a location affording minimal visual intrusion and/or maximum biocidal coverage, for example on the apex of the roof of a building with a sloping roof, or a corner not afforded a prominent view from below, or under eaves of known dimensions. One such embodiment would be a bar to fit underneath a window bar, allowing the area beneath the windowsill to be protected from algal growth without comprising the structural or aesthetic integrity of the window as a whole. The composition may also be shaped into, or for accommodation onto, functional objects such as garden furniture or fixtures such as garden tables, chairs, and umbrellas; bathroom furniture or fixtures; and play frames. When put to use as a functional object, it may be that degradable materials with particularly high structural integrity are used, or that the polymer or other material normally used for making the object is used, merely with the addition of the biocidal metal and mollusc, brachiopod, and/or crustacean shell fragments comprising chitin. When a composition is used which does not comprise a shapable degradable material, the composition comprising mollusc, brachiopod, and/or crustacean shell fragments comprising chitin admixed with biocidal metal, the mollusc, brachiopod and/or crustacean shell fragments in some instances also having biocidal metal bound thereto as described above, can be loaded into a container or housing, preferably rigid, of the desired shape.

Anywhere liable to be fouled by unwanted organisms is envisaged as a site for use. This may be a niche which encourages such growth through its humidity, such as roofing, gutters, walls, stonework of any variety, tiling, the area around swimming pools and ornamental fountains; water slides and other water park fixtures; outdoor decking areas, plant rooms, greenhouse walls and fixtures; and any other solid surface or structure in such an environment. All may be protected with the present invention. Preferably the claimed uses reduce the growth of fouling organisms on the surfaces of human-built structures, more preferably on the roofs of buildings. Similarly ships' hulls, decks, or other parts; oil rig supports and decks; and other marine structures; the surfaces of vehicles, paving or asphalt, may be protected by any of the claimed uses or compositions. In any use, a surface may be protected by placement of a composition upstream from the surface, as defined by a reoccurring fluid flow. A composition may also be placed in the same body of fluid, if the surface is partially or wholly submerged.

One particular use of the composition in relation to persistent bodies of water is the suppression of underwater pests such as zebra mussels, which are a globally distributed ecologically problematic species of mussel. The composition may be used to reduce underwater pests' growth, for example by placing the composition in or upstream of a body of water such as a water pipe, pond, river, or other body of water in need of such suppression. It may be used to reduce the growth of waterborne algae in such bodies of water. It may also be used in relation to cryptosporida, particularly cryptosporida oocysts.

As well as being shaped into blocks and other articles and structures, the compositions of the current invention, whether or not they comprise a degradable material, may be formed into pellets or particles, for example particles having an average diameter in the range of 0.1 mm to 5 mm, preferably 0.5 mm to 2 mm, more preferably 0.7 to 1.3 mm, which furnish a variety of uses complementary to blocks. The compositions may, for example, be introduced into a render matrix, which when used to affix tiles or join bricks or other masonry together, afford a long-lasting biocidal protection to the structure through the provision of a steady output of biocidal metal. Because in such applications structural stability is important, compositions tailored to have higher stabilities and/or lower releases rates may be used. For compositions comprising a degradable material such as a degradable polymer; pellets or particles may be made by grinding, milling, or otherwise reducing into smaller pieces a larger portion of the solidified composition, for example by extruding and then cutting a filament of the composition, or by producing a block of the composition and milling it. For compositions not comprising a shapable degradable material, the use of which is claimed, such pellets may be made by allowing pellets of the chitin-containing mollusc, brachiopod, and/or crustacean shell fragments, to bind biocidal metal.

These pellets and particles of either category of composition may also be incorporated into paints, coatings, and sealants, which when applied to a surface or joint protect it from the growth of algae and other fouling organisms. One envisaged embodiment is a sealant comprising pellets or particles as defined in the previous paragraph, and a polymer held in a liquid state until such factors as solvent evaporation or reaction with environmental humidity allow it to form a solid layer. Such paints and coatings may be used on masonry or concrete walls or other structures, benches and other hard furniture; may comprise varnishes for wooden structures such as furniture and decking; or may be used to protect the outer surface of any structure such as a building or infrastructural fitting such as a fence or electrical equipment. Such granules may either be pre-mixed into a paint or coating, or may be distributed in dry form onto a wet structure such as freshly poured concrete or a freshly painted or varnished structure.

Alternatively, the composition may be shaped into basic forms, enabling use in bulk with complementary materials. For example, it may be moulded, extruded, or otherwise produced into strips, fibres, filaments, bars, slabs, granules, blocks, or sheets, and may therefrom be attached to widely used standard materials. For example, sheets of the composition may be attached to the back of building cladding, or used as tiles of a shape and size tailored to complement the tiles of the wall intended for attachment. These tiles may be designed or attached so as to be replaceable once they have degraded to an appropriate extent.

Alternatively, the composition may be formed into filaments or fibres, and these filaments or fibres of the composition may be woven, sewn, or otherwise incorporated into material designed for exposure to fouling environments, such as sails and architectural sheets such as tent-material and marquee-fabric. It may be either as the sole material or may form the object in combination with other fabrics. Filaments may be placed at the joints between one architectural material and another, as many fouling organisms have spores which are nurtured by such confined, protected environments. Strips or tubes of any claimed degradable material-containing composition may be incorporated by adhesive, sewing, stapling, riveting, or any other method of incorporation, into any flexible material or device, for example textiles or sheeting. Such flexible materials and devices may be adhered, placed, wrapped, or otherwise made to associate with a surface, preferably an uneven surface, to reduce the growth of fouling organisms on or near the surface. Also envisaged is a material, which may be gauze-like, having at least one adhesive surface, with filaments of any of the claimed degradable material-containing compositions woven into it or attached to it, for sticking to uneven surfaces such as uneven roof surfaces. The material may be partly or entirely woven out of the composition filaments.

In some situations it may be preferable to use a composition comprising mollusc, brachiopod, and/or crustacean shell fragments comprising chitin admixed with a biocidal metal, without the addition of a degradable material. One way this may be achieved is by transferring a mixture of mollusc, brachiopod, and/or crustacean shell fragments comprising chitin and biocidal metal powder, wherein in some instances the mollusc, brachiopod and/or crustacean shell fragments also have biocidal metal bound thereto, to a container allowing entry and exit of fluid, such as a bag made of porous material or net. Preferably, this contained composition would be used to reduce the growth of fouling organisms on a human-built surface, preferably the roof of a building. The container preferably comprises a rigid housing. These containers may be situated in places similar to those appropriate for the composition additionally incorporating the degradable material. Alternatively, larger mollusc, brachiopod and/or crustacean shell fragments comprising chitin having biocidal metal bound thereto may simply be distributed in a selected niche already shaped to accommodate such fragments. For example, large copper-bound mollusc, brachiopod and/or crustacean shell fragments may be distributed throughout a gutter to allay the growth of fouling organisms. As such compositions are not protected by a layer of polymer or other degradable material, and the mollusc, brachiopod and/or crustacean shell fragments may comprise biocidal metal only on or near their surface, the rate of metal release may be higher than when encased in, for example, a polymer. As such this composition may be particularly well suited to applications requiring short-lived, high-concentration, biocidal action, for example in short-term or emergency clearance of accumulated fouling organisms.

The composition may also be used to reduce the growth of waterborne organisms such as algae, which may be unwanted in such places as ornamental ponds, swimming pools; fish tanks, fish farms, and other forms of aquaculture. In such applications, the composition may be fully or partially immersed in the water for treatment, or it may be affixed above the waterline in such a way that reoccurring fluid flows add appropriate amounts of biocidal metal to the body of water in question.

A variety of organisms are envisaged in the above uses. In structural and architectural applications, mosses, deposits of microscopic algae; and lichen are targeted in particular. In aquatic applications, mussels, barnacles, and other marine fouling organisms are envisaged in particular. Preferably, the organisms having their growth reduced comprise moss, algae, and/or lichen.

In any of the above uses, it is envisaged that the composition may be artificially irrigated, for example at times when biocidal activity is required but it is unlikely to rain naturally. This may be achieved by, for example, pouring water over the composition and allowing it to travel downstream to its intended area of action.

Also envisaged as part of the current invention is a device according to the fourth aspect of the present invention. The composition contained within the housing may further comprise a degradable material, and may have any of the features as defined above in relation to the claimed composition of the invention. The device is configured so as to protect the composition from damage and/or one or more environmental affront, and may also provide an easier way to affix or place the composition in an area intended for protection. It will further be appreciated that the housing of the device of the fourth aspect of the present invention may have two or more compositions contained within. In addition, it will be appreciated that the housing of the device may contain one or more block of the composition, i.e. one or more article formed of the composition therein.

The device comprises a composition comprising mollusc, brachiopod, and/or crustacean shell fragments comprising chitin admixed with a biocidal metal, and preferably at least one degradable material, and a housing which contains at least one inlet and at least one outlet. It is configured such that environmental fluid, such as rainwater, can enter the device, collect biocidal metal from the composition, and leave through an outlet, which may also have served as the inlet. The housing may be a rigid structure such as a plastic compartment, or it may be a porous material such as a material or net bag. Preferably it is a rigid structure, preferably constructed of a polymeric material. The housing may comprise holes for nails or screws; brackets, stilts; loops or strings by which it can be hung from another structure; or any other method of placement or attachment in or near an area intended for protection. The device may comprise an attachment plate to facilitate attachment of the device to a desired surface. This attachment plate may be rigid or flexible, preferably flexible, and can be attached using a variety of methods, including but not limited to, with nails, screws, or brackets. Additionally or alternatively, the attachment plate may be situated under a surface such as a roof tile or secured in place by the application of concrete over the attachment plate. The device may comprise adhesive pads for this purpose, or areas, preferably flat, configured so as to facilitate attachment to a surface using adhesive. The device may, in any of the mentioned embodiments, be configured to allow placement on the apex of a pitched surface such as on a ridge tile, which may be by having legs angled to receive the top of the pitched surface, with the points of attachment at the base of the legs. The considerations for placement of the device are similar to those for the composition itself: It may be affixed or placed anywhere in the direct vicinity of an area in which fouling organisms are to be disallowed, or upstream of any fluid flow leading to such an area. Preferably it is placed on the apex of the roof of a building.

The device itself may have a variety of features allowing modulation of the biocidal metal release rate and its responsiveness to different environmental affronts. For example, by comprising one or more region which is transparent to visible, UV, or other electromagnetic radiation, the housing may alter the interaction between the contained composition and the ambient UV or other degrading radiations in such a way as to tailor the rate of release to be appropriate for the given environment and use. There may be multiple transparent regions of different opacities, and each may house a composition of differing makeup so as to give a plurality of different release rates. Using similar logic, it is envisaged that some compartments may be more or less protected against rain, and may have bigger or smaller inlets and/or outlets, than others, in order to tailor the response of metal release to weather conditions and external hydraulic action. The device is configured to be refillable.

The device may be used in any situation in which the compositions themselves can be. It may be placed on any surface, on roofs, under windowsills; underwater for example in swimming pools, fish farms, cooling systems, hydroponic systems, in water-carrying pipes, or in fish tanks. Preferably, it is placed on a human-built surface, more preferably on a roof, more preferably the apex of the roof of a building. It may be configured so that once the enclosed composition has worn down to a point where the biocidal metal release rate is unsatisfactory, the composition, optionally in the form of a cartridge for easy handling, may be removed and replaced with a new composition. The device may also comprise a separate reservoir for a fluid such as water by which it is able to irrigate the downstream area with biocidal metal. It is further noted that the device is suitable for attachment to photovoltaic cells.

### Examples

### Example 1 - Copper release from compositions comprising BPA

Bisphenol A (Easycomposites) was premixed at a 10:3 ratio of resin to hardener (Easycomposites). Copper powder (<44µm particle size - Easycomposites) or anhydrous copper sulphate (Acros Organics) was mixed into this resin, either alone or premixed with dry mussel shell fragments (250 - 500µm). The composite was transferred to a mould of dimensions 5.2 x 7.4 x 1.6 cm and left for 48h before removal from the mould. The resulting block was then post cured at 90°C for 24 hours, and cut into three 1.6 x 1.6 x 5 cm tokens using a band saw. The tokens were then rinsed down with purified water and dried in an oven at 70°C for 24 hours. Table 1 shows the compositions prepared.

**Table 1: Compositions prepared.**

| Material | Polymer matrix | Copper loading | Other loading material |
|---|---|---|---|
| BPA10CP | 90 wt. % BPA resin | 10 wt. % copper powder | - |
| BPA10CS | 90 wt. % BPA resin | 10 wt. % anhydrous copper sulphate powder | - |
| BPA30CP | 70 wt. % BPA resin | 30 wt. % copper powder | - |
| BPA30CS | 71 wt. % BPA resin | 29 wt. % anhydrous copper sulphate powder | - |
| BPA40S39CP | 21 wt. % BPA resin | 39 wt. % copper powder | 40 wt. % mussel shell |
| BPA36S36CS | 27 wt. % BPA resin | 36 wt. % anhydrous copper sulphate powder | 36 wt. % mussel shell |

Stock solutions of pH 5 and 7 were prepared. The pH ~7 solution consisted of ultrapure water (pH varied daily between 6.0 and 7.5 over the span of the tests). The pH 5 solution was prepared by adding sulphuric acid (0.2 M), dropwise, to the ultrapure water until the desired pH was reached (Mettler Toledo pH meter) and the solutions were poured into 60mL screw top brown glass jars.

One token of each composite was fully submerged in the solutions at pH 5 and 7, before capping the jars and placing them in a water bath (20°C) for 24 hours. The process was then repeated for a further 24 hours and 22 hours with fresh solutions of the same pH. The tokens were then transferred to a sealable plastic bag, frozen for 24 hours, then defrosted over 4 hours at room temperature before being dried in an oven (70°C) for 70 hours. This erosion cycle (2 x 24 hours, 1 x 22 hours soak, 24 hours freeze, 4 hours defrost and 70 hours dry) was then repeated a further two times.

After each soaking step, aliquots (12 mL) of the soak solutions were analysed for copper content by Inductively Coupled Plasma (ICP - Varian 710-es). The solutions were analysed in their undiluted form. The standards used were concentrations of copper sulphate solutions made at 0, 0.1, 1, 10 and 100 ppm in ultrapure water. The wavelengths analysed, in descending order of reliability, were 327.40, 324.75, 213.60 and 224.70 nm.

The copper ions released from soak solutions at the different starting pH's was consistent for each material. After the initial soak of soak cycle 1, where there was a wash-off of surface copper sulphate, the copper ions released from the Bisphenol A resins containing 30% copper powder or 30% copper sulphate were higher than the Bisphenol A resins containing 10% copper powder or 10% copper sulphate and the copper ion release from the Bisphenol A resins containing copper sulphate was higher than the Bisphenol A resins containing copper powder.

However, at the highest loading of both copper powder and copper sulphate, the copper released when the Bisphenol A resins contained mussel shell was halved in the case of copper powder and a reduced by on average nine tenths for the copper sulphate-containing resins (Table 2).

**Table 2: Copper ion release from BPA composite materials.**

| Geo | BPA10CP | | BPA10CS | | BPA30CP | | BPA30CS | | BPA40S39CP | | BPA36S36CS | |
|---|---|---|---|---|---|---|---|---|---|---|---|---|
| | pH5 | pH -7 | pH5 | pH -7 | pH5 | pH -7 | pH5 | pH -7 | pH5 | pH -7 | pH5 | pH -7 |
| Cycle 1 (mg/L) | 0.02 | 0 01 | 239.54 | 255.77 | 0.08 | 0.05 | 117.52 | 108.85 | 0.10 | 0.04 | 390.03 | 380.14 |
| Cycle 2 (mg/L) | 0.01 | 0.02 | 19.32 | 17.37 | 0.14 | 0.0 7 | 30.52 | 25.97 | 0.03 | 0.02 | 2.79 | 4.60 |
| Cycle 3 (mg/L) | 0.04 | 0.02 | 12.98 | 11.95 | 0.14 | 0.04 | 26.36 | 23.92 | 0.11 | 0.05 | 1.92 | 1.60 |
| Average concentration of copper in solution at the end of each soak in cycles 2 and 3 (mg/L) | 0.03 | 0.02 | 16.15 | 14.66 | 0.14 | 0.05 | 28.44 | 24.95 | 0.07 | 0.03 | 2.36 | 3.10 |

### Example 2 - Copper release from compositions comprising PLA

A mould was prepared using a 15 x 15 x 5 cm block of aluminium, with a 5 x 5 cm chamber cut in the centre. A lower plate that was used had a raised portion (0.5 cm) that fitted into the chamber, and a 5 x 5 x 5 cm aluminium block was used to press the material down in the chamber.

Polylactic acid tokens were prepared using a Brabender instrument to mix the components together. The PLA beads (Greener Polymers), straw fibre (<1µm from milling) and copper powder were mixed before being added into the Brabender mixing chamber that had been pre-heated to 180°C and mixed at 45 rpm for 10 minutes. After this the molten mixture was transferred to the pre-heated (180-200 °C) 5 x 5 cm mould. This procedure was repeated because two Brabender runs were required to produce each biocomposite block (5 x 5 x 1.6 cm). The molten mixture from the Brabender was then transferred to a mould. The mould comprised a 15 x 15 x 5 cm block of aluminium, with a 5 x 5 cm chamber cut in the centre. A lower plate that was used had a raised portion (0.5 cm) that fitted into the chamber, and a 5 x 5 x 5 cm aluminium block was used to press the material down in the chamber.

Once the contents of the second Brabender run was added, the mould was press sealed, removed from the heat source and allowed to cool before being pressed out to remove the composite material. Two tokens for water erosion testing could be prepared from each biocomposite block, therefore a second block was prepared to produce the three tokens required (one token for each solution pH) to carry out the water erosion test. Table 3 shows the compositions prepared.

**Table 3: PLA compositions prepared.**

| Material | Polymer matrix | Copper loading | Other loading material |
|---|---|---|---|
| PLA5SF10CP | 85 wt. % Polylactic acid | 10 wt. % copper powder | 5 wt. % straw fibre |
| PLA5SF45CP | 50 wt. % Polylactic acid | 45 wt. % copper powder | 5 wt. % straw fibre |

Three soaking cycles were carried out with these compositions according to the method in Example 1. It was generally found that the pH drifted towards pH 6, and the test pH therefore remained comparable to that of rainwater.

The copper ions released from soak solutions at the different starting pH's was relatively consistent for each material. The copper ions released from the PLA composites containing 45% copper powder increased with every water erosion cycle (Table 4). The copper release from copper powder in PLA is two orders of magnitude higher than copper powder in BPA without shell and equivalent to copper sulphate in BPA with shell. This illustrates that PLA in the absence of shell degrades quickly and is more appropriate for applications needing a high release rate of biocidal metal.

**Table 4: Copper ion release from PLA composite materials.**

| Geo | PLA5SF10CP | | PLA5SF45CP | |
|---|---|---|---|---|
| | pH5 | pH ~7 | pHS | pH ~7 |
| Cycle 1 (mg/L) | 0.29 | 0.04 | 0.19 | 0.13 |
| Cycle 2 (mg/L) | 6.00 | 1.06 | 0.67 | 1.06 |
| Cycle 3 (mg/L) | 11.90 | 5.00 | 2.10 | 3.13 |
| Average concentration of copper in solution at the end of each soak in cycles 2 and 3 (mg /L) | 8.95 | 3.03 | 1.38 | 2.10 |

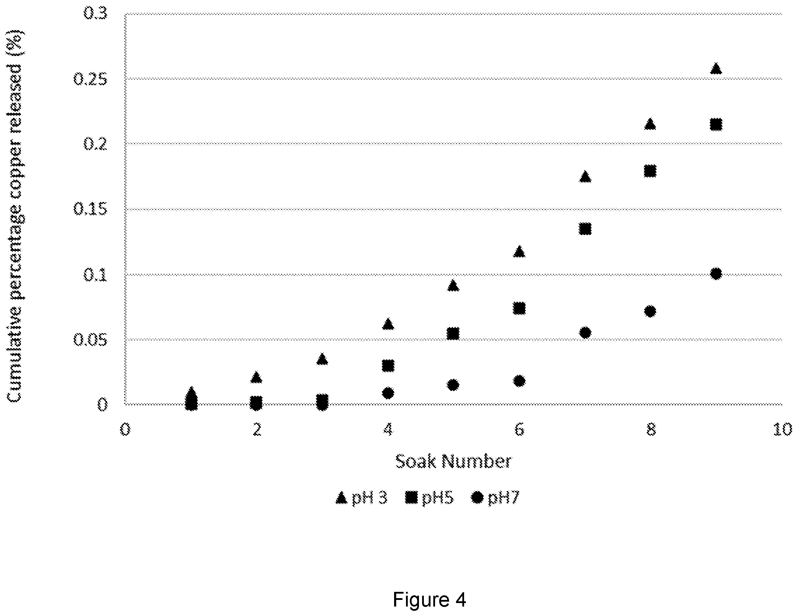

The erosion cycles provide accelerated weathering conditions, and it can be seen from the consistently sloping increase in cumulative copper release in Figure 4 that a consistent amount of copper is released after each cycle.

### Example 3 - Copper release from compositions comprising polyester and optionally undergoing photodegradation

Anhydrous copper sulphate (Acros Organics) was mixed with dry mussel shell fragments (250 - 500µm). Unsaturated polyester resin (MBFG) was mixed at a 100:2 ratio of resin to catalyst for 120 seconds, and then mixed into the copper sulphate/shell mixture for a further 60 seconds. The resulting mixture was poured into silicone moulds. Silicone moulds were prepared from silicone base and catalyst (Condensation cure silicone rubber, Dow Corning) mixed at a 10:1 ratio for 60 seconds, and poured into a rectangular reservoir with the approximate dimensions 4 x 6 x 1.7 cm. A token cut to a dimension of 1.6 x 1.6 x 5.0 cm was placed in the silicone/catalyst mixture. The silicone was left to cure for 1 hour at room temperature. After curing, the reservoir walls and base were removed, followed by the insert. After pouring the composite mixture into silicone moulds, the composites were left for 16h before removal from the mould. The composite block was then post cured at 90°C for 4 hours.

A list of the tokens prepared for weathering is provided in Table 5.

**Table 5: Polyester composite materials prepared.**

| Material | Polymer matrix (Polyester resin) | Copper loading (anhydrous CuSO₄) | Shell loading |
|---|---|---|---|
| LSMCu | 52.5 wt.% | 30 wt.% | 17.5 wt. % |
| MSLCu | 46.8 wt. % | 15 wt.% | 38.2 wt. % |
| MSMCu | 38.5 wt. % | 30 wt.% | 31.5 wt. % |
| MSHCu | 30.3 wt. % | 45 wt.% | 24.7 wt. % |
| HSMCu | 24.5 wt. % | 30 wt.% | 45.5 wt. % |

Table 6 shows the copper ion loading in each composite token.

**Table 6: Copper ion loading of mixed composite tokens prepared for weathering.**

| Material | Anhydrous copper sulphate loading | Copper ion loading |
|---|---|---|
| LSMCu | 30 wt. % | 12 wt.% |
| MSLCu | 15 wt.% | 6 wt.% |
| MSMCu | 30 wt. % | 12 wt.% |
| MSHCu | 45 wt. % | 18 wt.% |
| HSMCu | 30 wt. % | 12 wt.% |

Composite tokens were washed in 1L purified water for 60 seconds and dried in an oven at 90°C for 2 hours.

Soak solution 2.5 L at pH 5.5 were prepared by adding sulphuric acid (0.2M), dropwise, to ultrapure water until the desired pH was reached (Mettler Toledo pH meter).

One token of each composite was tied with string, and suspended in the prepared solutions, the jars sealed using parafilm. They were then left for 23 hours, after which the pH of the resulting solutions was determined. This process was repeated three times. After the third soak, the tokens were then transferred to a sealable plastic bag, frozen for 24 hours, then defrosted over 4 hours at room temperature before being dried in an oven (70°C) for 70 hours. This water erosion cycle (3 x 23 hours soak, 24 hours freeze, 4 hours defrost and 70 hours dry) was then repeated a further two times.

For one set of the samples, the tokens were exposed to NXE 1700 xenon lamps providing UV irradiance of 0.6 W/m² at 340 nm for 168 hours between the first and second water erosion cycles.

After each soaking step, aliquots (12 mL) of the soak solutions were analysed by Inductively Coupled Plasma (ICP - Varian 710-es). The solutions were analysed in their undiluted form. Copper and calcium standards were used for calibration, with concentrations made at 0, 0.1, 1, 10 and 100 ppm in ultrapure water. The wavelengths analysed for copper, in descending order of reliability, were 327.40, 324.75, 213.60 and 224.70 nm.

The change in pH for each soak solution after 23 hours of submersion in water initially adjusted to pH 5.5 with dilute sulphuric acid for the materials is shown in Tables 7 and 8. The soak solutions remained close to pH 5.5 during the soaks.

**Table 7: Average pH changes of soak solutions during each geodegradation cycle for the different materials undergoing geodegradation only.**

| | LSMCu | MSLCu | MSMCu | MSHCu | HSMCu |
|---|---|---|---|---|---|
| Cycle 1 | -0.5 | -0.2 | -0.3 | -0.6 | -0.3 |
| Cycle 2 | 0.15 | 0.19 | 0.02 | -0.1 | 0.07 |
| Cycle 3 | 0.51 | 1.13 | 0.36 | 0.02 | 0.2 |

**Table 8: Average pH changes of soak solutions during each geodegradation cycle for the different materials, with a photodegradation step between cycle 1 and 2.**

| | LSMCu | MSLCu | MSMCu | MSHCu | HSMCu |
|---|---|---|---|---|---|
| Cycle 1 | -0.4 | -0.1 | -0.1 | -0.2 | -0.1 |
| Cycle 2 | -0.3 | 0.48 | -0.1 | -0.4 | -0.4 |
| Cycle 3 | 0.14 | 1.08 | 0.43 | -0.3 | -0.1 |

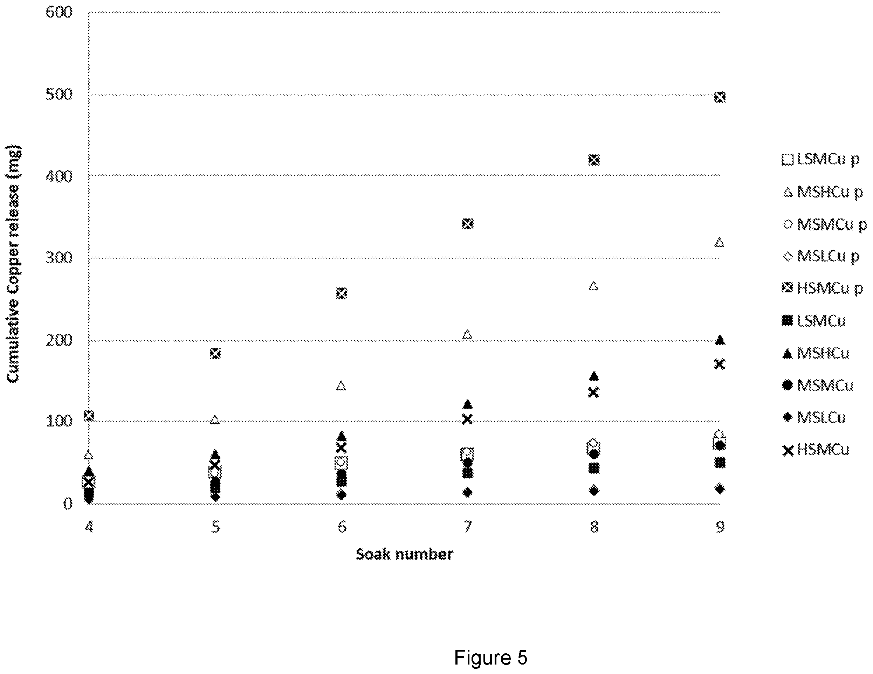

Figures 5 shows the cumulative copper release from the mixed biocomposite materials during geodegradation soak cycles 4 to 9, revealing how consistent the long-term trend is once surface copper has washed off. It also shows how UV light increases the rate of biocidal metal release.

**Table 9: Total copper release during geodegradation cycles.**

| Geo | LSMCu | MSLCu | MSMCu | MSHCu | HSMCu |
|---|---|---|---|---|---|
| Cycle 1 (mg/L) | 8.16 | 4.25 | 7.25 | 80.67 | 23.36 |
| Cycle 2 (mg/L) | 3.60 | 1.38 | 4.92 | 11.01 | 9.14 |
| Cycle 3 (mg/L) | 3.13 | 0.90 | 4.60 | 15.72 | 13.58 |
| Average concentration of copper in solution at the end of each soak in cycles 2 and 3 (mg /L) | 3.36 | 1.14 | 4.76 | 13.37 | 11.36 |

**Table 10: Total copper release during geodegradation cycles, with a photodegradation step between cycles 2 and 3.**

| Photo | LSMCu | MSLCu | MSMCu | MSHCu | HSMCu |
|---|---|---|---|---|---|
| Cycle 1 (mg/L) | 8.54 | 5.27 | 8.52 | 30.60 | 31.64 |
| Cycle 2 (mg/L) | 6.63 | 1.76 | 6.79 | 19.29 | 34.10 |
| Cycle 3 (mg/L) | 3.21 | 0.89 | 4.35 | 23.33 | 32.05 |
| Average concentration of copper in solution at the end of each soak in cycles 2 and 3 (mg /L) | 4.92 | 1.32 | 5.57 | 21.31 | 33.07 |

The average concentration of copper ions released into the 2.5L of soak solution during the second and third water erosion soaks are shown in Table 9. For a copper sulphate loading of 30%, the higher the ratio of shell to polymer in the composite, the more copper ions are released. Increasing the copper loading at a constant shell to polymer ratio also increases the amount of copper ions released.

The average concentration of copper ions released into the 2.5L of soak solution during the second and third water erosion soaks after exposure to UV for 168 hours between the first and second water erosion cycles are shown in Table 10. For a copper sulphate loading of 30%, the higher the ratio of shell to polymer in the composite, the more copper ions are released, because at this range of shell loading the erosion rate of the composition increases with shell proportion. Increasing the copper loading at a constant shell to polymer ratio also increases the amount of copper ions released. At the 30% and 45% copper loadings, exposure of the composites to UV after the first water erosion soak step caused increased copper release in the subsequent second and third water erosion soaking steps.

The impact of UV radiation on the stability of the composite material is particularly illustrated by comparison between the non-UV and UV treated composites at medium and high shell to polymer ratios. At lower concentrations of polymer, the damaging effect of UV radiation is more apparent through the tripling of the release of copper at the high shell to polymer ratio. Whereas at the medium shell to polymer ratio, the relative increase in the release of copper is less, even at the higher copper loading.

### Example 4 - Copper release from compositions comprising polyester and different types of shell fragment

Anhydrous copper sulphate (Acros Organics) was separately mixed with dry mussel, crab, oyster and whelk shell fragments (500-1000 µm) or smaller mussel shell fragments (250-500 µm). Unsaturated polyester resin (MBFG) was mixed at a 100:2 ratio of resin to catalyst for 120 seconds, and then mixed into the copper sulphate/shell mixture to give a ratio of 38.5 wt. % unsaturated polyester resin, 30 wt. % copper sulphate and 31.5 wt. % shell material (MSMCu composition) for a further 60 seconds. The resulting mixture was poured into silicone moulds as in Example 3.

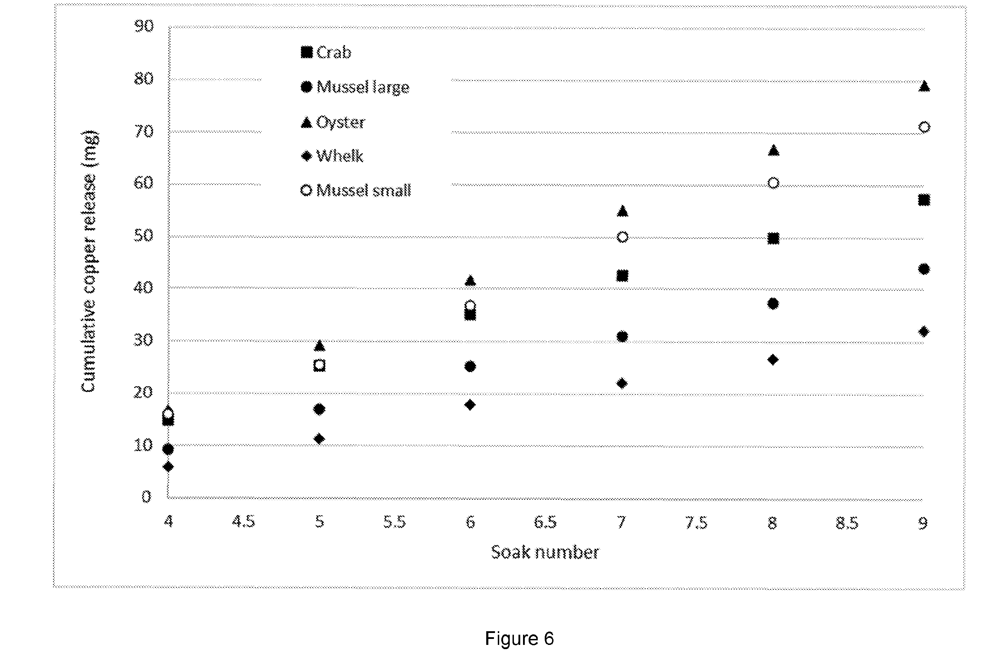

Varying the shell material for the MSMCu (Small mussel) compositional mass ratio material, Figure 6 shows the effect of the different shell components on copper release, and illustrates that small fragments of shell will make the composition release biocidal metal faster than larger fragments. It also illustrates the varying retention abilities of different types of shell fragments, with oyster shell releasing copper fastest and whelk the slowest.

This example demonstrates that other chitin-containing shell fragments and mussel shell fragments with a different fragment size can be used for this invention, and as they have different effects on the copper release rate may be used to fine-tune this rate for different applications.

### Example 5 - Assessing suppression of algae

Fresh water algae *Chlorella sp.* cultivated at between 10°C and 20°C for 14 days on Jaworskis Medium (Table below) was inoculated into fresh, sterile Jaworskis Medium (prepared as per Table 11) containing copper sulphate solution and copper-containing soak solutions. The soak solution was obtained from the third soak of the second cycle of phototreated MSMCu from Example 3. The extent of growth of *Chlorella sp.* was observed after a further 14 days (Table 12).

**Table 11: Composition of Jaworskis Medium used.**

| | Per 200ml |
|---|---|
| Ca(NO₃)₂, 4H₂O | 4.0g |
| KH₂PO₄ | 2.48g |
| MgSO₄, 7H₂O | 10.0g |
| NaHCO₃ | 3.18g |
| EDTAFeNa | 0.45g |
| EDTANa₂ | 0.45g |
| H₃BO₃ | 0.496g |
| MnCL₂, 4H₂O | 0.278g |
| (NH₄)6Mo₇O₂₄, 4H₂O | 0.2g |
| Cyanocobalamin | 0.008g |
| Thiamine HCL | 0.008g |
| Biotin | 0.008g |
| NaNO₃ | 16.0g |
| Na₂HPO₄, 12H₂O | 7.2g |

Table 12 illustrates the extent of growth of *Chlorella sp.* After 14 days in different concentrations of copper.

**Table 12: Growth of Chlorella sp. in Jaworskis Medium with different concentrations of copper.**

| Copper Concentration µg/L | Copper from Example 3 (MSMCu soak solution | | Copper sulphate solution | |
|---|---|---|---|---|
| | Abs 665nm | Abs 780nm | Abs 665nm | Abs 780nm |
| 0 | 0.089 | 0.087 | 0.089 | 0.087 |
| 1 | 0.133 | 0.114 | 0.137 | 0.118 |
| 2 | 0.143 | 0.127 | 0.143 | 0.128 |
| 4 | 0.167 | 0.152 | | |
| 5 | 0.103 | 0.092 | 0..103 | 0.096 |
| 7 | 0.079 | 0.069 | 0.081 | 0.077 |
| 9 | 0.089 | 0.081 | 0.092 | 0.077 |
| 11 | 0.078 | 0.066 | | |
| 20 | 0.078 | 0.072 | | |
| 50 | 0.015 | 0.014 | | |

This example illustrates that the copper released from the composite inhibits growth of algae as much as copper in copper sulphate solution added to the culture.

### Example 6 - Copper binding to crab shell fragments

Crab shell fragments (1g of 98.3% dry weight) of size 110µm to 250µm were placed in 30 ml of 170 g/L copper sulphate solution (78.82 g/L copper) an incubated under ambient conditions for 24 hours. The concentration of copper in the solution solutions were analysed for copper content by Inductively Coupled Plasma (ICP - Varian 710-es) after 1 hour, 4 hours and 24 hours.

The increase in the dry mass of the shell and the quantity of copper bound to the crab shell, calculated from the reduction in copper in solution is shown in Table 13 below.

The difference in the mass of copper bound to the shell and the increase in the shell dry mass after 24 hours is due in part to the formation of copper carbonate. The shell took on the light blue-green colour or copper carbonate after 24 hours of incubation.

**Table 13: Copper binding**

| Incubation time (hours) | Increase in shell mass (g) | Copper concentration in incubation solution (g/L) | Copper bound mg(Cu)/g(shell) |
|---|---|---|---|
| 1 | 0.13 | 74.05 | 0.15 |
| 4 | 0.13 | 72.35 | 0.20 |
| 24 | 1.86 | 49.52 | 0.89 |

## Claims

1. A composition for reducing the growth of fouling organisms through release of biocidal metal therefrom into the environment, the composition comprising: mollusc, brachiopod, and/or crustacean shell fragments comprising chitin; a biocidal metal; and a degradable material, wherein the mollusc, brachiopod, and/or crustacean shell fragments and biocidal metal are admixed with, and dispersed throughout, the degradable material.

2. The composition of claim 1, wherein the mollusc, brachiopod, and/or crustacean shell fragments are fragments greater than 10µm in size.

3. The composition of claim 1 or 2, wherein the biocidal metal is present as particles of diameter greater than 1 µm, and optionally wherein the biocidal metal comprises a metal selected from copper, zinc, potassium, and silver, preferably copper.

4. The composition of any preceding claim, wherein the biocidal metal is incorporated in the form of a biocidal metal salt, and preferably the percentage by weight of biocidal metal salt in the composition is 5% to 50%, more preferably 10% to 50%, more preferably 20% to 40%, and more preferably 25% to 35%.

5. The composition of any of claims 1 to 3, wherein the biocidal metal is incorporated in the form of particulate metal.

6. The composition of any preceding claim, wherein the degradable material is a photodegradable material.

7. The composition of any preceding claim, wherein the degradable material comprises a degradable polymer, optionally wherein the degradable material comprises a thermosetting polymer or a thermoplastic polymer, and optionally wherein the degradable material comprises a polymer selected from polyurethane, polylactic acid, polyhydroxyalkanoate, polypropylene, acrylic resin, BPA/F epoxy, polyketone, polyester, vinyl ester, novolac epoxy, PTFE, nylon 66, PEEK, melanoidin, and glycidylamine epoxy.

8. The composition of any preceding claim, wherein the degradable material comprises a blend of thermosetting polymer and thermoplastic polymer, and preferably, by weight the degradable material is 10% to 40% of thermosetting polymer, more preferably 25% to 65% of thermosetting polymer, and more preferably 60% to 90% of thermosetting polymer.

9. The composition of any preceding claim, wherein the composition comprises by weight 20% to 60% of degradable material, preferably 30% to 50% of degradable material, more preferably 35% to 45% of degradable material, optionally the composition is shaped into strips, fibres, filaments, bars, slabs, granules, blocks, or sheets, and optionally, the composition further comprises chitosan.

10. Use of a composition in reducing the growth of fouling organisms through release of biocidal metal therefrom into the environment, the composition comprising mollusc, brachiopod, and/or crustacean shell fragments comprising chitin admixed with a biocidal metal, preferably wherein the use is in an environment with levels of ultraviolet light, acidity, hydraulic erosion and/or fluctuation or extremes of temperature sufficient to induce the release of biocidal metal from the composition.

11. A device for reducing the growth of fouling organisms through release of biocidal metal therefrom into the environment, the device having a housing comprising an inlet and an outlet and a composition contained within the housing, the composition comprising: mollusc, brachiopod, and/or crustacean shell fragments comprising chitin admixed with a biocidal metal, wherein the device is configured such that a fluid may enter the housing, pass over the composition, and exit the housing, preferably wherein the composition further comprises a degradable material in which the mollusc, brachiopod, and/or crustacean shell fragments are dispersed throughout, and optionally wherein the composition contained within the housing is present as an article formed of the composition of claims 1 to 9.

12. Use of the device according to claim 11 in reducing the growth of fouling organisms.

13. A surface comprising the composition of any of claims 1 to 9 applied thereto, preferably wherein the surface is a roofing material, a component of a wall or floor, glazing or cladding.

14. A paint, coating, or sealant comprising the composition of claims 1 to 9 or the composition used in claim 10, preferably wherein the composition is provided as pellets or particles thereof.

15. An article formed of the composition according to any of claims 1 to 9, preferably the article is a ridge tile for a roof.

## Patentansprüche

1. Zusammensetzung zur Verringerung des Wachstums von Bewuchsorganismen durch Freisetzung von biozidem Metall daraus in die Umwelt, wobei die Zusammensetzung Folgendes umfasst: Weichtier-, Armfüßer- und/oder Krustentierschalenfragmente, die Chitin umfassen; ein biozides Metall; und ein degradierbares Material, wobei die Weichtier-, Armfüßer- und/oder Krustentierschalenfragmente und das biozide Metall mit dem degradierbaren Material vermischt und darin dispergiert sind.

2. Zusammensetzung nach Anspruch 1, wobei die Weichtier-, Armfüßer- und/oder Krustentierschalenfragmente größer als 10 µm sind.

3. Zusammensetzung nach Anspruch 1 oder 2, wobei das biozide Metall in Form von Partikeln mit einem Durchmesser von mehr als 1 µm vorliegt, und wobei das biozide Metall optional ein Metall umfasst, das aus Kupfer, Zink, Kalium und Silber, vorzugsweise Kupfer, ausgewählt ist.

4. Zusammensetzung nach einem vorstehenden Anspruch, wobei das biozide Metall in der Form eines bioziden Metallsalzes eingearbeitet ist und vorzugsweise der Gewichtsprozentsatz des bioziden Metallsalzes in der Zusammensetzung 5 % bis 50 %, bevorzugter 10 % bis 50 %, noch bevorzugter 20 % bis 40 % und noch bevorzugter 25 % bis 35 % beträgt.

5. Zusammensetzung nach einem der Ansprüche 1 bis 3, wobei das biozide Metall in der Form von partikulärem Metall eingearbeitet ist.

6. Zusammensetzung nach einem vorstehenden Anspruch, wobei das degradierbare Material ein photodegradierbares Material ist.

7. Zusammensetzung nach einem vorstehenden Anspruch, wobei das degradierbare Material ein degradierbares Polymer umfasst, wobei das degradierbare Material optional ein wärmehärtendes Polymer oder ein thermoplastisches Polymer umfasst, und wobei das degradierbare Material optional ein Polymer umfasst, das aus Polyurethan, Polymilchsäure, Polyhydroxyalkanoat, Polypropylen, Acrylharz, BPA/F-Epoxid, Polyketon, Polyester, Vinylester, Novolac-Epoxid, PTFE, Nylon 66, PEEK, Melanoidin und Glycidylamin-Epoxid ausgewählt ist.

8. Zusammensetzung nach einem vorstehenden Anspruch, wobei das degradierbare Material eine Mischung aus wärmehärtbarem Polymer und thermoplastischem Polymer umfasst und vorzugsweise ist das degradierbare Material, bezogen auf das Gewicht, 10 % bis 40% wärmehärtbares Polymer, noch bevorzugter 25% bis 65% wärmehärtbares Polymer und noch bevorzugter 60% bis 90% wärmehärtbares Polymer.

9. Zusammensetzung nach einem vorstehenden Anspruch, wobei die Zusammensetzung bezogen auf das Gewicht 20% bis 60% degradierbares Material, vorzugsweise 30% bis 50% degradierbares Material, noch bevorzugter 35% bis 45% degradierbares Material umfasst, wobei die Zusammensetzung optional zu Streifen, Fasern, Filamenten, Stäben, Platten, Granulat, Blöcken oder Blättern geformt ist und wobei die Zusammensetzung optional weiter Chitosan umfasst.

10. Verwendung einer Zusammensetzung zur Verringerung des Wachstums von Bewuchsorganismen durch Freisetzung von biozidem Metall daraus in die Umgebung, wobei die Zusammensetzung Weichtier-, Armfüßer- und/oder Krustentierschalenfragmente umfasst, die Chitin im Gemisch mit einem bioziden Metall umfasst, wobei die Verwendung vorzugsweise in einer Umgebung mit Ultraviolettlicht, Säure, hydraulischer Erosion und/oder Temperaturschwankungen oder -extremen erfolgt, die ausreichen, um die Freisetzung von biozidem Metall aus der Zusammensetzung zu induzieren.

11. Vorrichtung zur Verringerung des Wachstums von Bewuchsorganismen durch Freisetzung von biozidem Metall daraus in die Umgebung, wobei die Vorrichtung ein Gehäuse umfassend einen Einlass und einen Auslass und eine in dem Gehäuse enthaltene Zusammensetzung aufweist, wobei die Zusammensetzung Folgendes umfasst: Weichtier-, Armfüßer- und/oder Krustentierschalenfragmente, umfassend Chitin, das mit einem bioziden Metall vermischt ist, wobei die Vorrichtung so konfiguriert ist, dass ein Fluid in das Gehäuse eintreten, über die Zusammensetzung laufen und aus dem Gehäuse austreten kann, wobei die Zusammensetzung vorzugsweise weiter ein degradierbares Material umfasst, in dem die Weichtier-, Armfüßer- und/oder Krustentierschalenfragmente dispergiert sind, und wobei die in dem Gehäuse enthaltene Zusammensetzung optional als ein aus der Zusammensetzung nach den Ansprüchen 1 bis 9 gebildeter Artikel vorliegt.

12. Verwendung der Vorrichtung nach Anspruch 11 zur Verringerung des Wachstums von Bewuchsorganismen.

13. Oberfläche, umfassend die Zusammensetzung nach einem der Ansprüche 1 bis 9, die darauf aufgebracht ist, wobei die Oberfläche vorzugsweise ein Bedachungsmaterial, eine Komponente einer Wand oder eines Bodens, eine Verglasung oder eine Verkleidung ist.

14. Farbe, Beschichtung oder Dichtungsmittel, umfassend die Zusammensetzung nach den Ansprüchen 1 bis 9 oder die in Anspruch 10 verwendete Zusammensetzung, wobei die Zusammensetzung vorzugsweise in Form von Pellets oder Partikeln bereitgestellt wird.

15. Artikel, gebildet aus der Zusammensetzung nach einem der Ansprüche 1 bis 9, wobei der Artikel vorzugsweise ein Firstziegel für ein Dach ist.

## Revendications

1. Composition destinée à réduire la croissance d'organismes salissants par la libération de métal biocide de celle-ci dans l'environnement, la composition comprenant : des fragments de coquille de mollusque, brachiopode et /ou crustacé comprenant de la chitine ; un métal biocide ; et un matériau dégradable, dans laquelle les fragments de coquille de mollusque, brachiopode et/ou crustacé et le métal biocide sont mélangés au matériau dégradable et dispersés dans celui-ci.

2. Composition selon la revendication 1, dans laquelle les fragments de coquille de mollusque, brachiopode et/ou crustacé sont des fragments d'une taille de plus de 10 µm.

3. Composition selon la revendication 1 ou la revendication 2, dans laquelle le métal biocide est présent en tant que particules de diamètre supérieur à 1 µm, et facultativement dans laquelle le métal biocide comprend un métal sélectionné parmi le cuivre, le zinc, le potassium et l'argent, préférablement du cuivre.

4. Composition selon une quelconque revendication précédente, dans laquelle le métal biocide est incorporé sous la forme d'un sel de métal biocide, et préférablement le pourcentage en poids de sel de métal biocide dans la composition est de 5 % à 50 %, plus préférablement de 10 % à 50 %, plus préférablement de 20 % à 40 %, et plus préférablement de 25 % à 35 %.

5. Composition selon l'une quelconque des revendications 1 à 3, dans laquelle le métal biocide est incorporé sous la forme d'un métal particulaire.

6. Composition selon une quelconque revendication précédente, dans laquelle le matériau dégradable est un métal photodégradable.

7. Composition selon une quelconque revendication précédente, dans laquelle le matériau dégradable comprend un polymère dégradable, facultativement dans laquelle le matériau dégradable comprend un polymère thermodurcissable ou un polymère thermoplastique, et facultativement dans laquelle le matériau dégradable comprend un polymère sélectionné parmi polyuréthane, acide polylactique, polyhydroxyalcanoate, polypropylène, résine acrylique, résine BPA/F, polycétone, polyester, ester de vinyle, époxy novolaque, PTFE, nylon 66, PEEK, mélanoïdine et époxy de glycidylamine.

8. Composition selon une quelconque revendication précédente, dans laquelle le matériau dégradable comprend un mélange de polymère thermodurcissable et de polymère thermoplastique, et préférablement, en poids le matériau dégradable fait de 10 % à 40 % de polymère thermodurcissable, plus préférablement de 25 % à 65 % de polymère thermodurcissable, et plus préférablement de 60 % à 90 % de polymère thermodurcissable.

9. Composition selon une quelconque revendication précédente, dans laquelle la composition comprend en poids de 20 % à 60 % de matériau dégradable, préférablement de 30 % à 50 % de matériau dégradable, plus préférablement de 35 % à 45 % de matériau dégradable, facultativement la composition est façonnée en bandes, fibres, filaments, barres, plaques, granules, blocs ou feuilles, et facultativement, la composition comprend en outre du chitosane.

10. Utilisation d'une composition dans la réduction de la croissance d'organismes salissants par la libération d'un métal biocide depuis celle-ci dans l'environnement, la composition comprenant des fragments de coquille de mollusque, brachiopode et/ou crustacé comprenant de la chitine mélangés à un métal biocide, préférablement dans laquelle l'utilisation se fait dans un environnement avec des niveaux de lumière ultraviolette, d'acidité, d'érosion hydraulique et/ou de fluctuation ou d'extrémes de température suffisants pour induire la libération de métal biocide depuis la composition.

11. Dispositif pour réduire la croissance d'organismes salissants par la libération de métal biocide depuis celle-ci dans l'environnement, le dispositif présentant un boîtier comprenant une entrée et une sortie et une composition contenue dans le boîtier, la composition comprenant : des fragments de coquille de mollusque, brachiopode et/ou crustacé comprenant de la chitine mélangés à un métal biocide, dans lequel le dispositif est configuré de telle sorte qu'un fluide peut entrer dans le boîtier, passer par-dessus la composition et sortir du boîtier, préférablement dans lequel la composition comprend en outre un matériau dégradable dans lequel les fragments de coquille de mollusque, brachiopode et/ou crustacé sont dispersés dans celui-ci, et facultativement dans lequel la composition contenue dans le boîtier est présente en tant qu'article formé de la composition selon les revendications 1 à 9.

12. Utilisation du dispositif selon la revendication 11 pour réduire la croissance d'organismes salissants.

13. Surface comprenant la composition selon l'une quelconque des revendications 1 à 9 appliquée à celle-ci, préférablement dans laquelle la surface est un matériau de toiture, un composant d'un mur ou d'un plancher, un vitrage ou un placage.

14. Peinture, revêtement ou agent d'étanchéité comprenant la composition des revendications 1 à 9 ou la composition utilisée dans la revendication 10, préférablement dans lequel la composition est fournie sous forme de pastilles ou particules de celle-ci.

15. Article formé de la composition selon l'une quelconque des revendications 1 à 9, préférablement l'article est une tuile faîtière pour un toit.
